# EUROPEAN PATENT SPECIFICATION

(11) **EP 4 650 910 B1**
(45) Date of publication and mention of the grant of the patent: **29.04.2026**
(21) Application number: 25176557.4
(22) Date of filing: 15.05.2025
(51) Int. Cl.: G06F 1/16, G06F 1/20, H04M 1/04, A63F 13/98, H04M 1/72409

(54) **EXPANSION BASE AND EXPANSION SUPPORTING DEVICE**
EXPANSIONSBASIS UND EXPANSIONSUNTERSTÜTZUNGSVORRICHTUNG
BASE D'EXPANSION ET DISPOSITIF DE SUPPORT D'EXPANSION

(30) Priority: 16.05.2024 CN 202421068886 U
(43) Date of publication of application: 19.11.2025
(73) Proprietor: Shenzhen DeOne Innovation Technology Co., Ltd, Shenzhen, Guangdong 518129 (CN)
(72) Inventor: XIE, Huayong, Shenzhen, 518129 (CN); CAI, Jiongjun, Shenzhen, 518129 (CN)
(74) Representative: Metida

(56) References cited:
- KR-A- 20130 049 860
- US-A- 5 317 691
- US-A1- 2005 168 191
- US-A1- 2012 137 038
- US-A1- 2014 072 312
- US-A1- 2017 060 186

## Description

### TECHNICAL FIELD

The present invention relates to the technical field of expansion equipment, and in particular, to an expansion base and an expansion supporting device.

### BACKGROUNDART

An expansion device (for example, a power adapter, a network cable, a mouse, an external keyboard, a printer, and an external display) often needs to be used to perform function expansion on an existing mobile device such as a handheld game console and a tablet due to functional or configuration defects of the existing mobile device. The expansion device is connected to the mobile device through a data cable, to add functions to the mobile device. However, when a user uses the expansion device to add functions to a mobile device, the expansion device cannot be fixed or placed, so that use of the mobile device is affected.

Moreover, when the mobile device is used for a long time, a lot of heat can be generated. If the heat is dissipated only by a heat dissipation structure of the mobile device itself, the effect is poor, and the user experience and the service life of the mobile device are affected. US20050168191A1 discloses a handheld electronic device cradle with heat-dissipating capability; the cradle comprises a casing, a fan-mounting seat set up in the casing, an electrical fan secured to the seat and a cable for connecting the cradle with the host computer. US5317691 discloses a portable data device can be coupled with a local area network at any of a multiplicity of points and integrated into the system.

### SUMMARY

In the first aspect, the present invention provides an expansion base, which includes a first housing, a first circuit board and a first connection interface.

The first housing includes a first fixing portion and a placement portion, the first fixing portion is configured to detachably assemble at least one expansion device, the placement portion is configured to place a mobile device obliquely or vertically.

The first circuit board is located in the first housing.

The first connection interface is electrically connected to the first circuit board.

The first connection interface is arranged on the first fixing portion; when the at least one expansion device is assembled on the first fixing portion, when the at least one expansion device is assembled on the first fixing portion, the first connection interface is configured to be coupled with a second connection interface of the at least one expansion device, whereby the expansion base takes power from the at least one expansion device, to supply power to the at least one expansion device, and/or to communicate with the at least one expansion device for transmitting data.

The at least one expansion device includes a first expansion device and a second expansion device; the second connection interface is arranged on the first expansion device; the first expansion device is one of a docking station, a storage device and a power bank; the second expansion device is one of a heat dissipation device or a heat dissipation, or lighting module; and the second expansion device is configured to be arranged between the mobile device and the first expansion device.

In this embodiment, the expansion base further includes a third connection interface; the third connection interface is electrically connected to the first circuit board; the third connection interface is configured to be coupled with a fourth connection interface of the second expansion device, whereby the expansion base supplies power to the second expansion device or transmits data with the second expansion device through the third connection interface.

In this embodiment, the at least one expansion device further includes a third expansion device. The first housing further includes a second fixing portion; the second fixing portion is detachably assembled on the third expansion device; when the third expansion device is assembled on the second fixing portion, the third expansion device is coupled with the expansion base, whereby the expansion base takes power from the third expansion device, to supply power to the third expansion device, and/or to communicate with the third expansion device for transmitting data.

In this embodiment, the first fixing portion includes a plug-in slot; a bottom wall of the plug-in slot includes an opening for exposing a port component of the first connection interface; and the plug-in slot is configured to store and fix one end of the first expansion device.

In this embodiment, the expansion base further includes a first magnetic member; the first magnetic member is arranged on the first fixing portion; and the first magnetic member is configured to magnetically cooperate with a second magnetic member on the first expansion device, whereby the first expansion device is fixed on the first fixing portion.

In this embodiment, the first housing includes a bottom plate, a front plate, a rear plate, a first side plate, a second side plate, and a top plate. The front plate is connected to the bottom plate. The rear plate is connected to the bottom plate and is opposite to the front plate. The first side plate is connected to the bottom plate, the front plate and the rear plate. The second side plate is opposite to the first side plate and is connected to the bottom plate, the front plate and the rear plate. The placement portion is connected to the front plate, the first side plate and the second side plate. The top plate is connected between the placement portion and the rear plate, the top plate is connected to the first side plate and the second side plate. The bottom plate is configured to be placed on an external supporting surface. The first fixing portion is arranged on the top plate; and the first connection interface is arranged on the top plate.

In this embodiment, the front plate is connected to the bottom plate at an acute angle. The rear plate is connected to the bottom plate at an acute angle. The placement portion includes a rear supporting plate connected to the top plate, a bottom bearing plate connected to the rear supporting plate, a front supporting plate connected to the bottom bearing plate, and a limiting plate. The rear supporting plate is connected to the bottom bearing plate at an obtuse angle. The limiting plate is connected between the front supporting plate and the front plate. The front supporting plate is connected to the bottom bearing plate at an obtuse angle. The front supporting plate is connected to the limiting plate at an obtuse angle; and the bottom plate and the bottom bearing plate are configured parallel to each other.

In this embodiment, the expansion base further includes a built-in battery. The built-in battery is arranged inside the first housing and is electrically connected to the first circuit board.

In the second aspect, the present invention further provides an expansion supporting device including a first expansion base and the at least one expansion device. The first expansion base uses the expansion base described above, and the at least one expansion device uses the at least one expansion device described above.

In this embodiment, the first expansion base further includes the third connection interface; and the third connection interface is electrically connected to the first circuit board. The third connection interface is configured to be coupled with the fourth connection interface of the second expansion device, whereby the first expansion base supplies power to the second expansion device or transmits data with the second expansion device through the third connection interface. The second expansion device includes a second housing, a second circuit board and the second connection interface. The second circuit board is arranged inside the second housing. The fourth connection interface is electrically connected to the second circuit board. The second housing includes a main supporting plate, a back supporting plate opposite to the main supporting plate, and a side wall connected between an edge of the main supporting plate and an edge of the back supporting plate.

In this embodiment, the at least one expansion device includes a heat dissipation device; the heat dissipation device includes a heat dissipation element and a control button which are arranged on the second housing. The control button is electrically connected to the second circuit board and is mounted in a button opening of the second housing for user operation. The heat dissipation element includes at least one heat dissipation fan. The at least one heat dissipation fan is arranged in the second housing. The main supporting plate is provided with a plurality of air outlets corresponding to the at least one heat dissipation fan. The back supporting plate is provided with a plurality of air inlets corresponding to the heat dissipation fan. The at least one heat dissipation fan is configured to conduct heat from the air inlets to the air outlets, whereby discharging and bringing away heat generated by the mobile device.

In this embodiment, the back supporting plate is provided with a mounting structure. The mounting structure is configured to be connected and fixed with the first expansion device. The back supporting plate includes a main body portion, a groove portion, and two guide portions; at least part of the first expansion device is stored and fixed in a mounting groove of the groove portion. The guide portions are connected between the main body portion and two side walls of the groove portion. A distance between the two guide portions is greater than a distance between the two side walls of the groove portion, whereby at least part of the first expansion device to extend into the groove portion.

In this embodiment, when the second expansion device is placed on the first fixing portion and is coupled with the expansion base, and an outer surface of the main supporting plate is coplanar with the supporting surface of the placement portion for supporting the mobile device.

In this embodiment, the second expansion device further includes a plurality of light-emitting elements. The plurality of light-emitting elements are arranged inside the second housing and are electrically connected to the second circuit board. Light emitted by the plurality of light-emitting elements passes through the second housing and is emitted to the outside of the second expansion device to form a lighting effect.

In this embodiment, the expansion supporting device further includes a second expansion base; a structure of the second expansion base and a structure of the first expansion base are the same; and the first expansion base and the second expansion base are arranged side by side to jointly support the same mobile device. The first expansion base and the second expansion base are connected integrally through a buckle connection structure or a magnetic suction connection structure; when the first expansion base and the second expansion base are connected integrally, the placement portion of the first expansion base and the placement portion of the second expansion base are aligned and connected.

By use of the above technical solutions, the present disclosure has the beneficial effects: The first fixing portion is arranged on the expansion base, so that the expansion base and the expansion device are detachably assembled. The placement portion is arranged on the expansion base for placement of the mobile device. Furthermore, the at least one expansion device is coupled with the mobile device to achieve function expansion on the mobile device. For example, the docking station with a plurality of functional connection ports can be connected to a plurality of expansion devices to provide the power bank to prolong the battery life, provide the storage device to achieve data storage, and the like. Due to the arrangement of the first fixing portion and the placement portion of the expansion base, the expansion device and the mobile device can be both arranged on the expansion base. Furthermore, the mobile device and the expansion device are fixed or placed through the expansion base, and can be electrically connected to each other or in data connection with each other, which facilitates a user to use the expansion device to add functions to the mobile device, making a good user experience. Meanwhile, the second expansion device such as the heat dissipation device is arranged between the expansion device and the mobile device, which can effectively reduce a temperature between the mobile device and the expansion device or expand add functions to the mobile device, so that the mobile device has more expandable functions, and the user experience is enhanced.

### BRIEF DESCRIPTION OF THE DRAWINGS

In order to explain the technical solutions of the embodiments of the present invention more clearly, the following will briefly introduce the accompanying drawings used in the embodiments. The drawings in the following description are only some embodiments of the present invention. Those of ordinary skill in the art can obtain other drawings based on these drawings without creative work.

The present invention is further described below in detail in combination with the accompanying drawings and embodiments.

In order to explain the technical solutions of the embodiments of the present invention more clearly, the following will briefly introduce the accompanying drawings used in the embodiments. Apparently, the drawings in the following description are only some embodiments of the present invention. Those of ordinary skill in the art can obtain other drawings based on these drawings without creative work.
FIG. 1 is a three-dimensional diagram of an expansion supporting device according to an embodiment of the present invention;
FIG. 2 is an exploded view of the expansion supporting device shown in FIG. 1;
FIG. 3 is a three-dimensional diagram of an expansion supporting device shown in Embodiment I of the present invention;
FIG. 4 is a three-dimensional diagram of an expansion supporting device shown in Embodiment I of the present invention in another angle;
FIG. 5 is an exploded view of the expansion supporting device shown in FIG. 3;
FIG. 6 is an exploded view of the expansion supporting device shown in FIG. 3 in another angle;
FIG. 7 is a reference diagram of a usage state of the expansion supporting device shown in FIG. 3;
FIG. 8 is a reference diagram of a usage state of the expansion supporting device shown in FIG. 3 in another angle;
FIG. 9 is an exploded view of an expansion base of the expansion supporting device shown in FIG. 3;
FIG. 10 is an enlarged view of part A in FIG. 9;
FIG. 11 is an exploded view of an expansion base of the expansion supporting device shown in FIG. 3 in another angle;
FIG. 12 is an exploded view of a second expansion device of the expansion supporting device shown in FIG. 3;
FIG. 13 is an exploded view of a second expansion device of the expansion supporting device shown in FIG. 3 in another angle;
FIG. 14 is an enlarged view of part B in FIG. 13;
FIG. 15 is an exploded view of a first expansion device of the expansion supporting device shown in FIG. 3;
FIG. 16 is an exploded view of a first expansion device of the expansion supporting device shown in FIG. 3 in another angle;
FIG. 17 is an exploded view of an expansion supporting device shown in Embodiment II of the present invention;
FIG. 18 is an exploded view of an expansion supporting device shown in Embodiment II of the present invention in another angle;
FIG. 19 is an exploded view of an expansion supporting device shown in Embodiment III of the present invention;
FIG. 20 is an exploded view of an expansion supporting device shown in Embodiment III of the present invention in another angle;
FIG. 21 is an exploded view of an expansion supporting device shown in Embodiment IV of the present invention;
FIG. 22 is an exploded view of an expansion supporting device shown in Embodiment IV of the present invention in another angle;
FIG. 23 is an exploded view of an expansion supporting device shown in Embodiment V of the present invention;
FIG. 24 is an exploded view of an expansion supporting device shown in Embodiment V of the present invention in another angle;
FIG. 25 is an exploded view of a lighting module of an expansion supporting device shown in Embodiment V of the present invention;
FIG. 26 is an exploded view of an expansion supporting device shown in Embodiment VI of the present invention;
FIG. 27 is an exploded view of a first expansion device of an expansion supporting device shown in Embodiment VI of the present invention;
FIG. 28 is an exploded view of an expansion supporting device shown in a change embodiment of Embodiment VI of the present invention;
FIG. 29 is an exploded view of a first expansion device shown in a change embodiment of Embodiment VI of the present invention;
FIG. 30 is a three-dimensional diagram of an expansion supporting device shown in Embodiment VII of the present invention;
FIG. 31 is a three-dimensional diagram of an expansion supporting device shown in Embodiment VII of the present invention in another angle;
FIG. 32 is a reference diagram of a usage state of an expansion supporting device shown in Embodiment VII of the present invention;
FIG. 33 is an exploded view of an expansion supporting device shown in Embodiment VII of the present invention;
FIG. 34 is an exploded view of an expansion supporting device shown in Embodiment VII of the present invention in another angle;
FIG. 35 is an exploded view of an expansion supporting device shown in a change embodiment of Embodiment VII of the present invention;
FIG. 36 is an exploded view of a first expansion base of the expansion supporting device shown in FIG. 35;
FIG. 37 is a three-dimensional diagram of an expansion supporting device shown in Embodiment VIII of the present invention;
FIG. 38 is a three-dimensional diagram of an expansion supporting device shown in Embodiment VIII of the present invention in another angle;
FIG. 39 is a reference diagram of a usage state of an expansion supporting device shown in Embodiment VIII of the present invention;
FIG. 40 is a structural block diagram of an expansion supporting device shown in Embodiment VIII of the present invention;
FIG. 41 is a three-dimensional diagram of an expansion supporting device shown in Embodiment IX of the present invention;
FIG. 42 is a three-dimensional diagram of an expansion supporting device shown in Embodiment IX of the present invention in another angle;
FIG. 43 is an exploded view of an expansion supporting device shown in Embodiment IX of the present invention;
FIG. 44 is an exploded view of an expansion supporting device shown in Embodiment IX of the present invention in another angle;
FIG. 45 is a reference diagram of a usage state of an expansion supporting device shown in Embodiment IX of the present invention;
FIG. 46 is a three-dimensional diagram of an expansion supporting device shown in Embodiment X of the present invention;
FIG. 47 is an exploded view of the expansion supporting device shown in FIG. 46; and
FIG. 48 is an exploded view of the expansion supporting device shown in FIG. 46 in another angle.

### DETAILED DESCRIPTION OF THE EMBODIMENTS

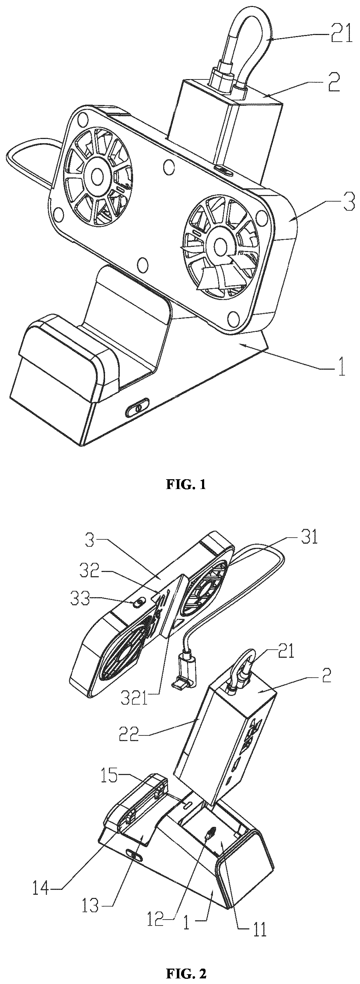

This embodiment relates to an expansion base 1 with a heat dissipation fan 31, as shown in FIG. 1. A bottom of the expansion base 1 can be placed on a supporting surface. The supporting surface can be a desktop, a floor, or another plane. At least one plug-in portion 11 is arranged at an upper part of the expansion base 1 for assembling of the expansion device 2. After the expansion device 2 is assembled on the plug-in portion 11, the expansion device can be fixed on the expansion base 1. A placement portion 13 is further arranged on the expansion base 1. On the placement portion 13, a mobile device can be slantways or vertically placed. The mobile device can be a handheld game console, a tablet, a mobile phone, or the like. The mobile device is coupled with the at least one expansion device 2 to achieve functional expansion on the mobile device.

In this embodiment, the plug-in portion 11 is a plug-in slot. The expansion device 2 can be detachably plugged into the plug-in slot, so that the expansion device 2 can be removed to achieve replacement of expansion devices 2 with different functions or of different model numbers. The plug-in portion 11 is provided with a connector 12 for coupling the expansion device 2. The connector 12 can be connectors 12 with different model numbers, such as a Micro USB connector or a Lighting connector, to adapt to expansion devices 2 with different model numbers, or can be a high-definition multimedia interface (HDMI) connector, a headphone connector, or the like, to adapt to expansion devices 2 with different functions. In this embodiment, the connector 12 is a TYPE-c connector.

In other embodiments, the plug-in portion 11 can be a magnetic suction portion. A magnetic block arranged on the expansion base 1 magnetically cooperates with a magnetic block arranged on the expansion device 2, so that the expansion device 2 is detachably assembled on the expansion base 1.

As shown in FIG. 2, a heat dissipation component 3 is arranged between the expansion device 2 and the mobile device. The heat dissipation component 3 is coupled to the expansion base 1 or the mobile device, or can be coupled to the expansion device 2, for the heat dissipation component 3 to take power from the expansion device 2 or the mobile device. The heat dissipation component 3 can dissipate heat of the expansion device 2 mounted on the plug-in portion 11, thereby reducing a temperature between the heat dissipation component 3 and the expansion device 2.

In this embodiment, the heat dissipation component 3 is specifically arranged on the expansion base 1, and a control circuit board is arranged inside the expansion base 1. The control circuit board is coupled with the connector 12, so that power can be taken from the expansion device 2 that is in plugged connection to the expansion base 1. Therefore, when the expansion device 2 is a power module, the heat dissipation component 3 does not need to be powered by the mobile device or an external power source, and only needs to transmit current from the control circuit board to the heat dissipation component 3 through the power module, and the power module can be coupled with the mobile device to charge the mobile device. Meanwhile, the mobile device can also adjust a wind speed or an on or off state of the heat dissipation component 3 through the indirectly electrically connected control circuit board. The expansion device 2 can also be a docking station which is provided with a plurality of connection ports for expansion connection to the mobile device. Specifically, a patch cord 21 is arranged on the expansion device 2 for the coupling between this expansion device 2 and the mobile device.

In other embodiments, the expansion base 1 is provided with a rechargeable battery. The rechargeable battery is coupled with the control circuit board. A jack 15 is provided in the expansion base 1. The jack 15 can be used by the external power source to charge the rechargeable battery inside this expansion device 2. Similarly, the expansion base 1 can also supply power to the expansion device 2 and the heat dissipation component 3 through the connector 12 and the jack 15, or charge the mobile device, or charge other electronic devices that need to be charged, such as an electric toothbrush and a wireless mouse.

Specifically, a mounting structure is arranged on the heat dissipation component 3 or the expansion device 2. The mounting structure can allow the heat dissipation component 3 to be mounted on the expansion device 2, and a heat dissipation surface of the heat dissipation component 3 faces the mobile device, so that the heat dissipation component 3 can better dissipate heat of the mobile device. Specifically, the heat dissipation component 3 is a heat dissipation fan 31. The heat dissipation fan 31 is provided with a button 33. The button 33 can control turning on or turning off of the heat dissipation fan 31, or can control a gear position of the heat dissipation fan 31. The heat dissipation fan 31 is provided with an air outlet and an air inlet. The air outlet is close to the mobile device to blow an air flow towards the mobile device, and the air inlet is close to the expansion device 2. The air flow at the air inlet can also dissipate the heat of the expansion device, but the heat dissipation effect of the air inlet is poorer than that of the air outlet. In other embodiments, the heat dissipation structure is a semiconductor heat sink.

It should be noted that the mounting structure includes a mounting groove 32 provided in the heat dissipation component 3 and an embedding portion 22 arranged on the expansion device 2. The embedding portion 22 is embedded into the mounting groove 32 for the heat dissipation component 3 to be positioned on the expansion device 2, to mount and fix the heat dissipation component 3. Specifically, after the embedding portion 22 is embedded into the mounting groove 32, the embedding portion 22 is in clearance fit with the mounting groove 32, thereby reducing shaking of the heat dissipation component 3.

In other embodiments, the mounting structure is a magnetic suction structure. The mounting structure includes a magnetic structure, and the magnetic structure includes a magnet and a magnetic member. The magnet and the magnetic member are arranged between the heat dissipation component 3 and the expansion device 2, or between the heat dissipation component 3 and the mobile device. The mounting structure can also be a hook and loop fastener.

In this embodiment, the mounting groove 32 is provided in one surface of the heat dissipation member 3 away from the heat dissipation surface, and a placement surface is arranged on the expansion base 1. The placement surface abuts against a bottom of the heat dissipation member 3. The embedding portion 22 is embedded into the mounting groove 32to more stably fix the heat dissipation member 3. Specifically, the embedding portion 22 is a surface of the expansion device 2 close to the heat dissipation component 3. The expansion device 2 is a cuboid. A bottom of the mounting groove 32 is fitted to the above surface of the expansion device 2. A wall of the mounting groove 32 is fitted to a surface of the expansion device 2 close to the above surface. Specifically, the mounting groove 32 is a cuboid to adapt to a width and height of the expansion device 2. The mounting groove 32 communicates two opposite side surfaces of the heat dissipation component 3, thereby adapting to expansion devices 2 with different lengths.

Preferably, the placement portion 13 is a placement groove provided in the expansion base 1. The placement groove communicates two opposite side surfaces of the expansion base 1, so that even a mobile device with a width greater than a width of the placement groove can be placed on the expansion base 1, thereby improving the adaptability of the expansion base 1 to mobile devices with different widths. In other embodiments, the placement groove communicates two adjacent side surfaces.

It should be noted that the placement groove includes a first surface and a second surface. A back surface of the mobile device leans against the first surface, and the bottom of the mobile device abuts against the second surface, so as to slantways or vertically place the mobile device on the expansion base 1. Specifically, in this embodiment, the first surface is slantways arranged relative to the supporting surface, so that the back surface of the mobile device is slantways fitted to the first surface. In this way, the bottom of the mobile device tilts forwards and abuts against the second surface to slantways place the mobile device on the expansion base 1.

Preferably, a limiting plate 14 is arranged on the second surface of the placement groove in a raised manner. The limiting plate 14 faces the first surface. The limiting plate 14 is matched with the placement groove, so that a portion of the bottom of the mobile device abuts against the placement groove, and another portion abuts against the limiting plate 14, to improve the stability of the mobile device after placement.

It should be added that when the embedding portion 22 is embedded into the mounting groove 32 and the bottom of the heat dissipation component 3 abuts against the placement surface, the first surface of the placement groove is coplanar with the heat dissipation surface of the heat dissipation component 3. In this case, the heat dissipation component 3 and the first surface of the placement groove can be used to allow the back surface of the mobile device to be fitted, thereby preventing the back surface of the mobile device that is higher than the first surface of the placement groove from being partially suspended without abutment, and improving the stability of the mobile device after placement. In this embodiment, a slope 321 is arranged at an edge of the mounting groove 32. The slope 321 facilitates the embedding of the embedding portion 22 into the mounting groove 32. The jack 15 is provided in the placement surface to allow a power plug on the heat dissipation component 3 to be plugged.

For ease of understanding, the following will illustrate different embodiments to explain the solutions of the present invention.

### Embodiment I

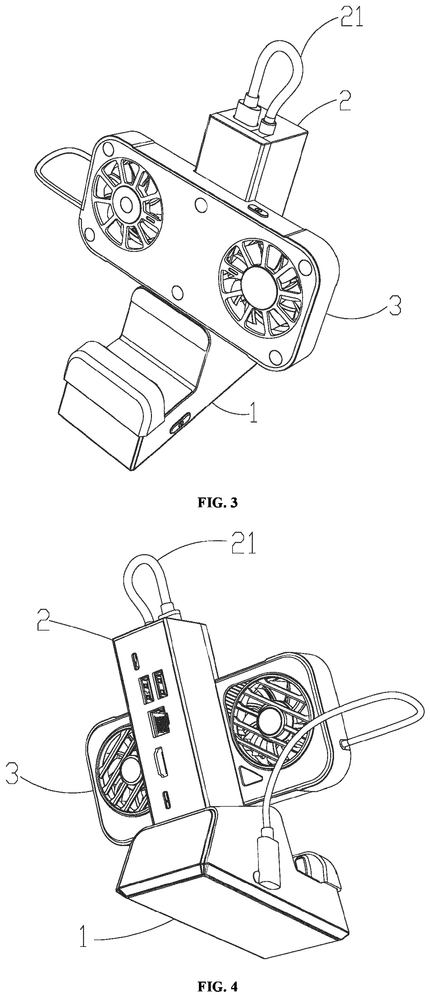

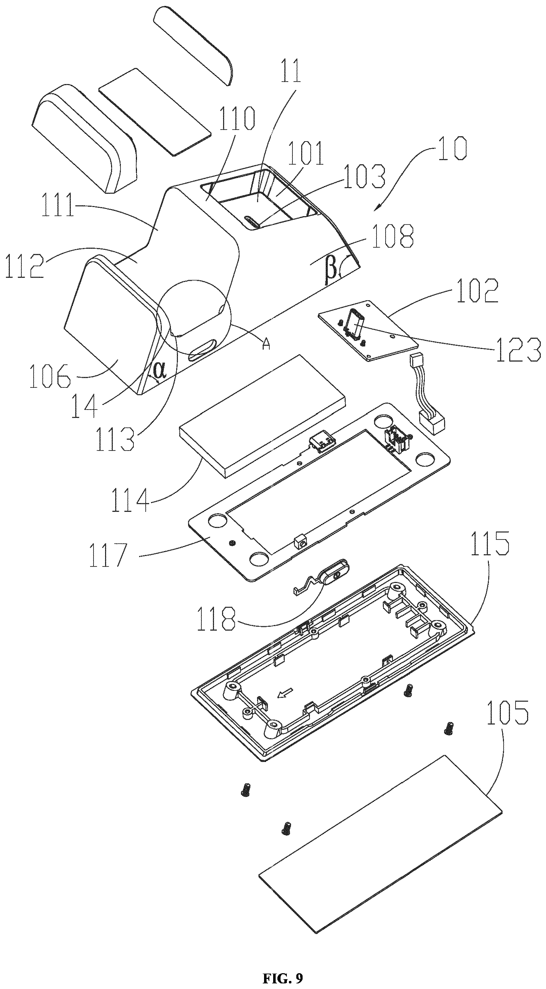

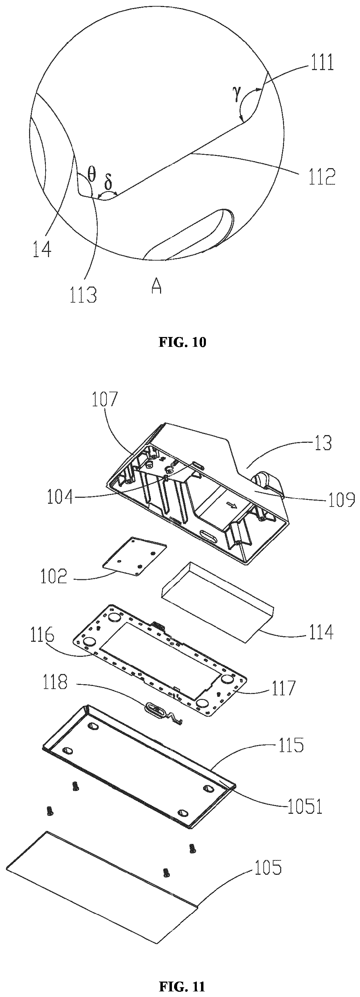

Specifically, referring to FIG. 3 to FIG. 15, FIG. 3 to FIG. 15 show an expansion base 1 and an expansion supporting device 10000 according to Embodiment I of the present invention.

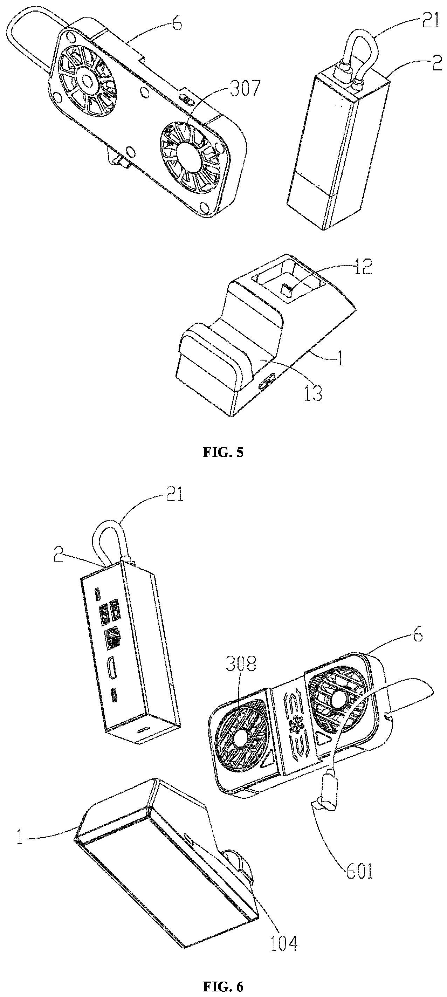

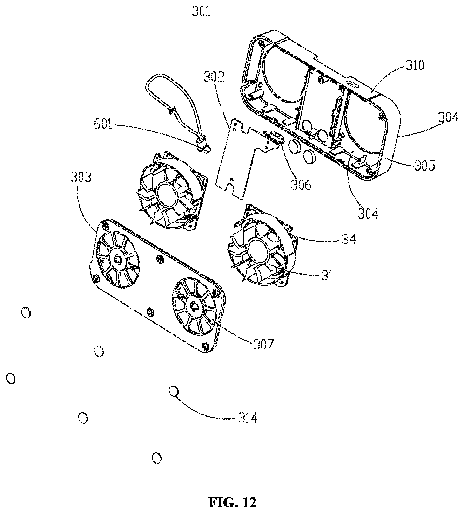

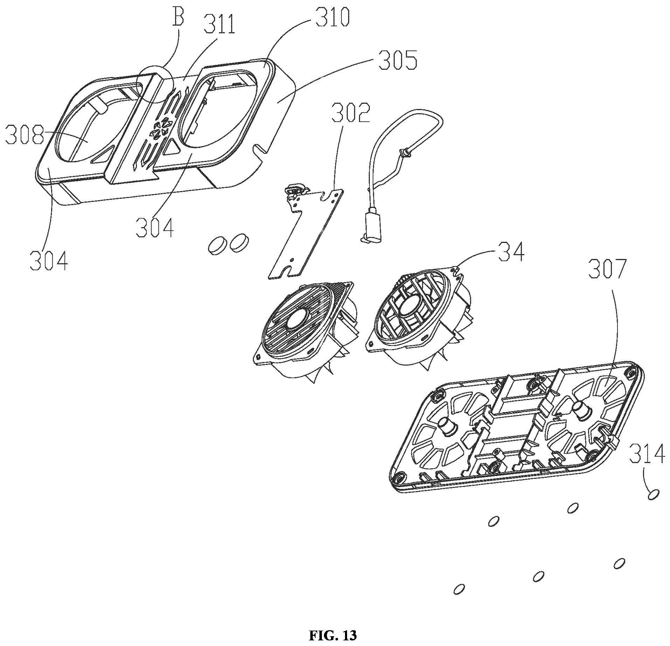

Referring to FIG. 3 and FIG. 4, the expansion supporting device 10000 provided in Embodiment I includes an expansion base 1 and at least one expansion device 2. Specifically, referring to FIG. 5, FIG. 8, and FIG. 15, the expansion device 2 includes a first expansion device 4 and a second expansion device 6. The first expansion device 4 includes a docking station 41, and the second expansion device 6 includes a heat dissipation device 63. Referring to FIG. 12 and FIG. 13, in this embodiment, the heat dissipation device 63 includes a heat dissipation element 34. The heat dissipation element 34 includes a heat dissipation fan 31. The heat dissipation fan 31 is taken as an example for explanation.

In this embodiment, the expansion base 1 includes a first housing 10, a first circuit board 102, and a first connection interface 103. The first housing 10 includes a first fixing portion 101 and a placement portion 13. The first fixing portion 101 is configured to detachably assemble the first expansion device 4, and the placement portion 13 is configured to slantways or vertically place a mobile device. The first circuit board 102 is arranged inside the first housing 10. The first connection interface 103 is electrically connected to the first circuit board 102. The first connection interface 103 is arranged on the first fixing portion 101. The first connection interface 103 is configured to be coupled with a second connection interface 401 on the first expansion device 4 when the first expansion device 4 is assembled on the first fixing portion 101, so that the expansion base 1 is in electrical connection or communicative connection with the first expansion device 4, or the expansion base 1 is in electrical and communicative connection with the first expansion device 4.

Specifically, the first fixing portion 101 includes a plug-in slot. A bottom wall of the plug-in slot has an opening for exposing a port component 123 of the first connection interface 103. The plug-in slot is configured to store and fix one end of the first expansion device 4, thus achieving detachable connection between the first expansion device 4 and the expansion base 1. In this embodiment, the first fixing portion 101 is a plug-in portion 11, which specifically uses a plug-in slot structure. In other embodiments, the first fixing portion 101 can be another connection structure, such as magnetic suction connection structure. Due to the detachable connection, the first expansion device 4 and the expansion base 1 can be used separately or in combination, making it convenient for a user to select a use mode according to an actual need. This expands an application scenario of the product and enhances the user experience.

In this embodiment, when the first expansion device 4 is assembled on the first fixing portion 101, the expansion base 1 can supply power to and communicate with the first expansion device 4 to transmit data. In other embodiments, the expansion base 1 can take power from the first expansion device 4. When powered by the expansion base 1, the first expansion device 4 can continue to be used without an externally connected power source or if the first expansion device runs out of power. The expansion base 1 communicates with the first expansion device 4 to transmit data, which can diversify functions of the product, save relevant data, and enhance the user experience.

Specifically, the expansion base 1 further includes a third connection interface 104. The third connection interface 104 is electrically connected to the first circuit board 102. The third connection interface 104 is configured to be coupled with a fourth connection interface 601 of a second expansion device 6, so that the expansion base 1 supplies power to the second expansion device 6 through the third connection interface 104.

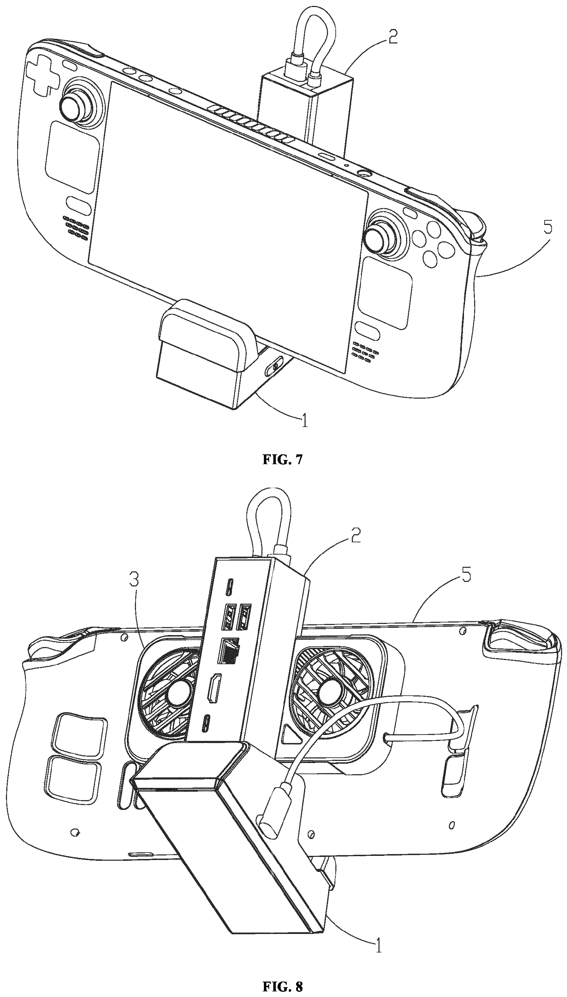

Referring to FIG. 7 and FIG. 8, FIG. 7 and FIG. 8 show a reference diagram of a usage state when the expansion supporting device 10000 is connected to a mobile device 5. The mobile device 5 is placed in the placement portion 13 of the expansion base 1. The first expansion device 4 is detachably connected to the expansion base 1 through the first fixing portion 101. The second expansion device 6 is a heat dissipation fan 31, which is arranged between the mobile device 5 and the first expansion device 4. The heat dissipation fan 31 is detachably connected to the first expansion device 4, and the heat dissipation fan 31 is supported by the expansion base 1 and takes power from the expansion base 1. After being switched on, the heat dissipation fan 31 can push an air flow to flow from the first expansion device 4 towards the mobile device 5, thereby cooling the mobile device 5, prolonging the service life of the mobile device 5, and enhancing the user experience.

Referring to FIG. 9 to FIG. 11, FIG. 9, FIG. 10, and FIG. 11 show a schematic structural diagram of the expansion base 1. The first housing 10 of the expansion base 1 includes a bottom plate 105, a front plate 106, a rear plate 107, a first side plate 108, a second side plate 109, the placement portion 13, and a top plate 110. The front plate 106 is connected to the bottom plate 105. The rear plate 107 is connected to the bottom plate 105 and is opposite to the front plate 106. The first side plate 108 is connected to the bottom plate 105, the front plate 106, and the rear plate 107. The second side plate 109 is opposite to the first side plate 108 and is connected to the bottom plate 105, the front plate 106, and the rear plate 107. The placement portion 13 is connected to the front plate 106, the first side plate 108, and the second side plate 109. The top plate 110 is connected between the placement portion 13 and the rear plate 107 and is connected to the first side plate 108 and the second side plate 109. The bottom plate 105 is configured to be placed on an external supporting surface. The first fixing portion 101 is arranged on the top plate 110. The first connection interface 103 is arranged on the top plate 110. The third connection interface 104 is located on either the first side plate 108 or the second side plate 109. The bottom plate 105 is enclosed with the front plate 106, the rear plate 107, the first side plate 108, the second side plate 109, the placement portion 13, and the top plate 110 to form a cavity, and the first circuit board 102 is arranged inside the cavity.

Specifically, an angle α between the front plate 106 and the bottom plate 105 is an acute angle, and an angle β between the rear plate 107 and the bottom plate 105 is an acute angle. The placement portion 13 includes a rear supporting plate 111 connected to the first fixing portion 101, a bottom bearing plate 112 connected to the rear supporting plate 111, and a front supporting plate 113 connected to the bottom bearing plate 112. An angle γ between the rear supporting plate 111 and the bottom bearing plate 112 is an obtuse angle. The placement portion 13 further includes a limiting plate 14. The limiting plate 14 is connected between the front supporting plate 113 and the front plate 106. An angle δ between the front supporting plate 113 and the bottom bearing plate 112 is an obtuse angle. An angle θ between the front supporting plate 113 and the limiting plate 14 is an obtuse angle. The top plate 110 is vertically connected to the rear supporting plate 111. The bottom plate 105 and the bottom bearing plate 112 are parallel to each other. The first side plate 108 and the second side plate 109 are parallel to each other and are vertically connected to the bottom plate 105.

In this embodiment, the expansion base 1 further includes a built-in battery 114. The built-in battery 114 is arranged inside the first housing 10 and is electrically connected to the first circuit board 102, so as to supply power to the first expansion device 4 and the second expansion device 6. The expansion base 1 is further provided with a charging port connected to the external power source, to charge the built-in battery 114. By the arrangement of the built-in battery 114, the service life of the first expansion device 4 or the second expansion device 6 can be prolonged, and power can be supplied to the mobile device 5 or other devices. It is convenient for a user to carry and use the built-in battery.

In order to improve the functionality of the expansion base 1 and provide a user with a better visual effect, the expansion base 1 further includes a first light-emitting element 115. The light-emitting element 115 is electrically connected to the first circuit board 102. The first light-emitting element 115 is arranged inside the first housing 10 and is adjacent to the bottom plate 105. Therefore, when the first light-emitting element 115 is turned on, emitted light can be directed towards the bottom plate 105 or the first side plate 108 or the second side plate 109 or the front plate 106 or the rear plate 107. Specifically, in this embodiment, a light-transmittance portion 1051 is arranged on the bottom plate 105. The light-transmittance portion 1051 is arranged along a circumferential edge of the bottom plate 105 and is connected to the front plate 106, the rear plate 107, the first side plate 108, and the second side plate 109. The bottom plate 105, the front plate 106, the rear plate 107, the first side plate 108, and the second side plate 109 are made of a shading material. The light-transmittance portion 1051 is made of a light-transmittance material. In this embodiment, the light-transmittance portion 1051 is a light-transmittance adhesive tape, so that light emitted by the first light-emitting element 115 can be transmitted out of the expansion base 1 through the light-transmittance portion 1051. The first light-emitting element 115 includes light-emitting diodes (LEDs) 116 and a lamp panel 117 electrically connected to the LEDs 116. The lamp panel 117 is electrically connected to the first circuit board 102. The LEDs 116 can emit light with various colors, and can emit light in different colors in a regular manner according to a built-in program of the first circuit board 102. The first light-emitting element 115 further includes an on-off button 118. The on-off button 118 is electrically connected to the lamp panel 117 to control the LEDs 116 to be on or off. The on-off button 118 is located on either the first side plate 108 or the second side plate 109. In this embodiment, the on-off button 118 and the third connection interface 104 are respectively located on the first side plate 108 and the second side plate 109.

Due to a large amount of heat generated by the mobile device 5 during use, better heat dissipation is required to ensure continued use of the mobile device 5. In this embodiment, the second expansion device 6 uses the heat dissipation fan 31 for heat dissipation. In other embodiments, the second expansion device 6 can be a lighting module, a storage device, a power bank, or the like. The second expansion device 6 includes a heat dissipation device 63. Specifically, the heat dissipation device 63 includes a heat dissipation element 34, and the heat dissipation element 34 may be a heat dissipation fan 31, a cooling sheet, a water cooling circulation device, or the like. This embodiment takes the heat dissipation fan 31 as an example for explanation.

Referring to FIG. 12 and FIG. 13, FIG. 12 and FIG. 13 show exploded views of the second expansion device 6. The second expansion device 6 includes a heat dissipation device 63. The heat dissipation device 63 includes a second housing 301, a second circuit board 302, and the fourth connection interface 601. The second circuit board 302 is arranged inside the second housing 301, and the fourth connection interface 601 is electrically connected to the second circuit board 302. The second housing 301 includes a main supporting plate 303, a back supporting plate 304 opposite to the main supporting plate 303, and an annular side wall 305 connected between an edge of the main supporting plate 303 and the back supporting plate 304.

The heat dissipation device 63 further includes the heat dissipation element 34 and a control button 306 which are arranged on the second housing 301. The control button 306 is electrically connected to the second circuit board 302 and is mounted in a button opening of the second housing 301 for user operation. The heat dissipation element 34 includes at least one heat dissipation fan 31. Specifically, in this embodiment, two heat dissipation fans 31 are included. Each heat dissipation fan 31 is an axial flow fan. The heat dissipation fans 31 are arranged inside the second housing 301. The main supporting plate 303 is provided with a plurality of air outlets 307 corresponding to the heat dissipation fans 31. The back supporting plate 304 is provided with a plurality of air inlets 308 corresponding to the heat dissipation fans 31. The heat dissipation fans 31 are configured to guide an air flow from the air inlets 308 to the air outlets 307 for being discharged and bringing away heat of the mobile device 5. A plurality of decorative pieces 314 are arranged on an outer surface of the main supporting plate 303. The plurality of decorative pieces 314 are configured to: cover a screw or bolt that connects the main supporting plate 303 to the back supporting plate 304 and be in contact with a back portion of the mobile device 5, so that the outer surface of the main supporting plate 303 is close to or fitted to the mobile device 5, allowing the air flow to flow out through the air outlets 307 and bring away the heat of the mobile device 5. In other embodiments, there may be one, three, or more heat dissipation fans 31. Using the heat dissipation fans 31 to achieve cooling can reduce the costs of the product, thus improving the competitiveness of the product.

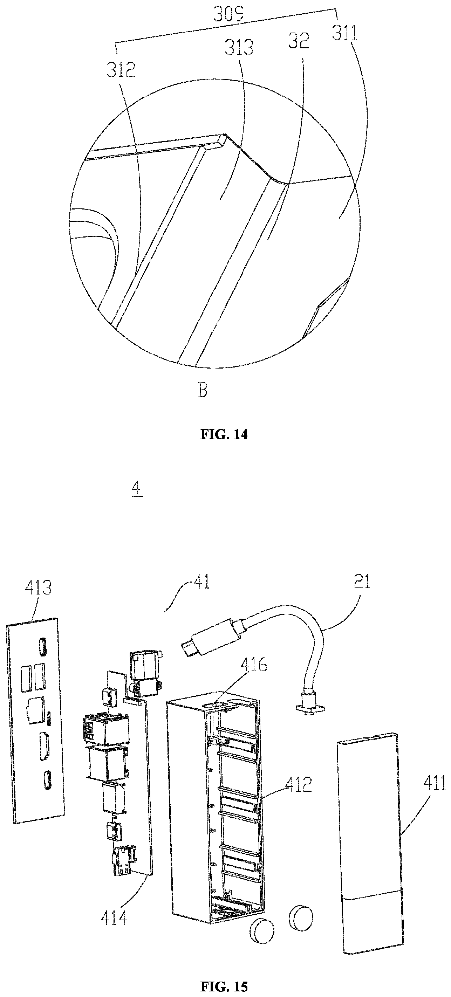

Specifically, referring to FIG. 13 and FIG. 14, the back supporting plate 304 has a mounting structure 309. The mounting structure 309 is configured to connect and fix the first expansion device 4. The back supporting plate 304 includes a main body portion 310 and a groove portion 311, and at least a portion of the first expansion device 4 can be stored and fixed in the mounting groove 32 of the groove portion 311. The back supporting plate 304 further includes two oblique guide portions 312 connected between the main body portion 310 and two side walls 313 of the groove portion 311. A distance between the two guide portions 312 is greater than a distance between the two side walls 313 of the groove portion 311, thereby facilitating at least a portion of the first expansion device 4 to extend into the groove portion 311. In this embodiment, the guide portions 312 are slopes that connect the main body portion 310 to the groove portion 311. A distance from joints between the two slopes and the main body portion 310 is greater than the distance between the two side walls 313 of the groove portion 311, thereby facilitating a partial structure of the first expansion device 4 to be clamped into the groove portion 311, to achieve detachable connection between the first expansion device 4 and the second expansion device 6. Due to their detachable connection, the first expansion device 4 and the second expansion device 6 can be used separately or in combination, making it convenient for user selection and also facilitating carrying when they are used in combination.

Specifically, when the first expansion device 4 is assembled on the first fixing portion 101 and is coupled with the expansion base 1, the groove portion 311 of the heat dissipation device 63 is clamped with the first expansion device 4; the annular side wall 305 of the heat dissipation device 63 abuts against the top plate 110 of the expansion base 1; and the outer surface of the main supporting plate 303 of the heat dissipation device 63 and an outer surface of the rear supporting plate 111 of the placement portion 13 are on the same plane, namely, the outer surface of the main supporting plate 303 is coplanar with the supporting surface of the placement portion 13 for supporting the mobile device 5. In this setting, a back surface of the mobile device 5 can be in contact with the outer surface of the main supporting plate 303 and the outer surface of the rear supporting plate 111 of the placement portion 13 when placed on the placement portion 13 of the expansion base 1. This ensures the stability of the mobile device 5 and avoids shaking of the mobile device 5 when the mobile device 5 is placed on the expansion supporting device 10000, thereby enhancing the user experience.

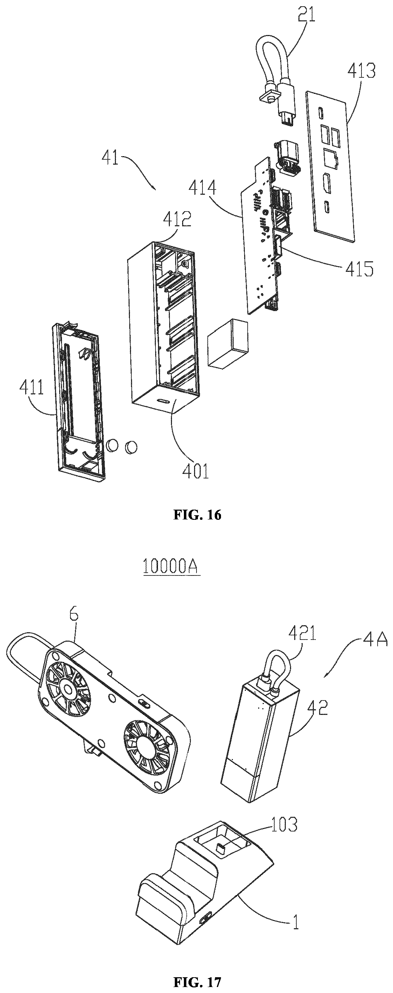

Referring to FIG. 15 and FIG. 16, FIG. 15 and FIG. 16 show exploded views of the first expansion device 4. In this embodiment, the first expansion device 4 is a docking station 41. In other embodiments, the first expansion device 4 can be a power bank, a storage device, a lighting module, or the like.

Specifically, the first expansion device 4 includes a front shell 411, a middle frame 412, and a rear shell 413. The front shell 411 and the rear shell 413 are respectively connected on two opposite sides of the middle frame 412. The front shell 411, the middle frame 412, and the rear shell 413 are enclosed to form an accommodating cavity. The first expansion device 4 further includes a third circuit board 414 and a connection port 415 electrically connected to the third circuit board 414. The third circuit board 414 is arranged inside the accommodating cavity, and at least one connection port 415 is included, which is exposed out of the first expansion device 4 through an opening in the front shell 411, the middle frame 412, or the rear shell 413, thereby facilitating connection to an external device such as the mobile device 5. The front shell 411 includes an embedding portion 22. The embedding portion 22 cooperates and is clamped with the groove portion 311 of the second expansion device 6 to achieve the detachable connection between the first expansion device 4 and the second expansion device 6. The first expansion device 4 further includes a patch cord 21. One end of the patch cord 21 is electrically connected to the third circuit board 414, and the other end of the patch cord 21 is configured to be connected to the external device such as the mobile device 5, to achieve data transmission or electrical connection, or to achieve data transmission and electrical connection. The first expansion device 4 further includes a clamping slot 416. A shape of the clamping slot 416 is matched with a shape of the other end of the patch cord 21. The clamping slot 416 is provided in the front shell 411, the middle frame 412, or the rear shell 413. In this embodiment, the clamping slot 416 is arranged in the middle frame 412. One end of the patch cord 21 is electrically connected to the third circuit board 414 through the middle frame 412. When the second expansion device 6 is not connected to the external device such as the mobile device 5, the other end of the patch cord 21 can be arranged in the clamping slot 416 to protect the other end of the patch cord 21 from being damaged.

The first expansion device 4 further includes a second connection interface 401. The second connection interface 401 is located in the middle frame 412. The second connection interface 401 and the clamping slot 416 are separately arranged on end surfaces of two ends of the middle frame 412. The second connection interface 401 is provided with the connection port 415, which can be in electrical or communicative connection to the port component 123 on the first connection interface 103 of the expansion base 1, or can achieve electrical and communicative connections. In this embodiment, the connection port 415 on the second connection interface 401 is a Type-c connection port. The port component 123 on the first connection interface 103 is a Type-c port, which can achieve the electrical and communicative connections.

The second expansion device 6 includes a plurality of connection ports 415. The connection ports 415 include at least one of a USB-C connection port, a USB-A connection port, a network cable connection port, an HDMI connection port, and a Type-c connection port. Specifically, in this embodiment, the connection ports 415 include the USB-C connection port, the USB-A connection port, the network cable connection port, the HDMI connection port, and the Type-c connection port, so that the second expansion device 6 can be connected to an external device with different connection ports 415, thus expanding a usage scenario and application scenario of the product; and the second expansion device can be also simultaneously connected to a plurality of expansion devices to achieve different functions. In the present invention, when the second expansion device 6 is the docking station 41, it can be used alone.

### Embodiment II

For ease of understanding and description, in Embodiment II of the present invention, solution content of the same parts as in Embodiment I will not be repeated, and differences will be described in detail.

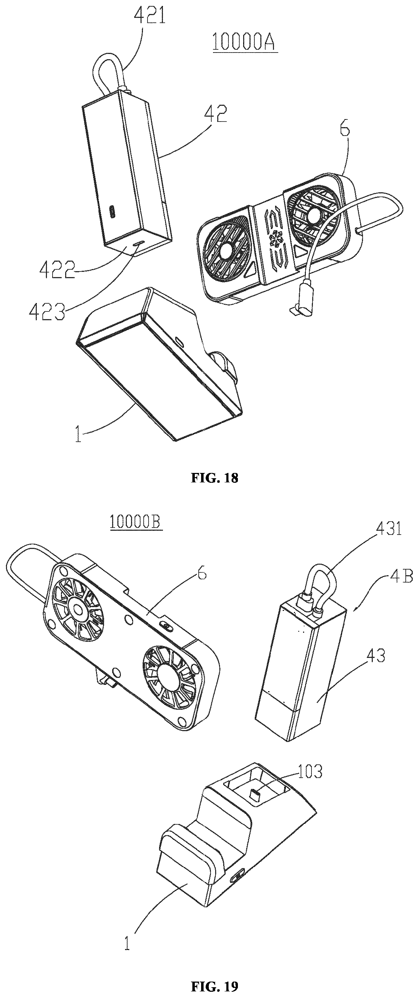

Referring to FIG. 17 and FIG. 18, FIG. 17 and FIG. 18 show exploded views of an expansion supporting device 10000A according to Embodiment II in two angles. In this embodiment, the expansion supporting device 10000A includes an expansion base 1, a first expansion device 4A, and a second expansion device 6. The first expansion device 4A is a storage device 42. Specifically, the storage device 42 is a hard disk drive. In this embodiment, the expansion base 1 and the second expansion device 6 are the same as those in Embodiment I, except that the first expansion device 4A has been changed.

A patch cord 421 is arranged at one end of the storage device 42, and a second connection interface 422 is arranged at the other end. The second connection interface 422 is connected to the first connection interface 103 of the expansion base 1. The second connection interface 422 is provided with a connection port 423 which is specifically a Type-c connection port and can be in electrical and/or communicative connection to the Type-c port on the first connection interface 103, thereby achieving electrical connection and/or data transmission.

When the storage device 42 is assembled on the expansion base 1, the patch cord 421 is connected to a port of the mobile device, so that data of the mobile device can be transmitted to the storage device 42 for storage, thereby reducing a data storage load of the mobile device or backing up the data of the mobile device to the storage device 42 to avoid data loss caused by a fault or damage of the mobile device.

In other embodiments, the storage device 42 may not have the patch cord 421, and only the corresponding connection port 423 is provided. The patch cord 421 for data transmission can be an independent patch cord 421 or an ordinary data cable, as long as it can achieve data transmission.

### Embodiment III

For ease of understanding and description, in Embodiment III of the present invention, solution content of the same parts as in Embodiment I will not be repeated, and differences will be described in detail.

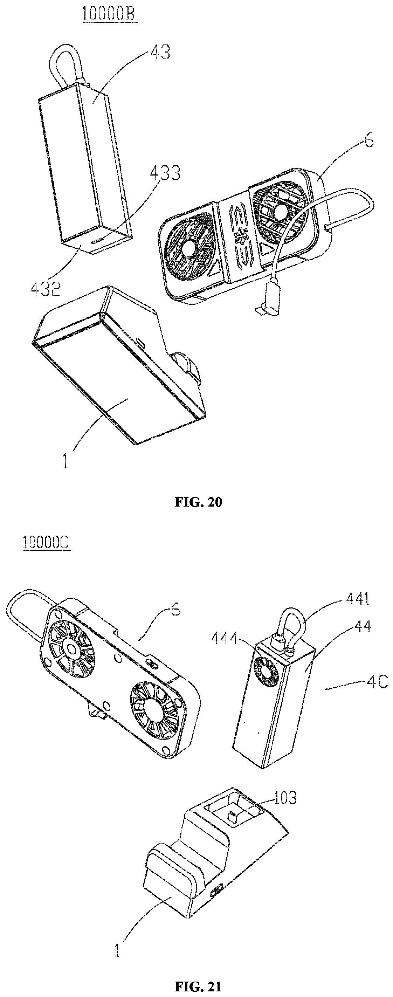

Referring to FIG. 19 and FIG. 20, FIG. 19 and FIG. 20 show exploded views of an expansion supporting device 10000B according to Embodiment III in two angles. In this embodiment, the expansion supporting device 10000B includes an expansion base 1, a first expansion device 4B, and a second expansion device 6. The first expansion device 4B is a power bank 43. In this embodiment, the expansion base 1 and the second expansion device 6 are the same as those in Embodiment I, except that the first expansion device 4B has been changed.

A patch cord 431 is arranged at one end of the power bank 43, and a second connection interface 432 is arranged at the other end. The second connection interface 432 is connected to the first connection interface 103 of the expansion base 1. The second connection interface 432 is provided with a connection port 433 which is specifically a Type-c connection port and can be electrically connected to the Type-c port in the first connection interface 103, thereby supplying power to the expansion base 1.

When the power bank 43 is arranged on the expansion base 1, the patch cord 431 is connected to a port of the mobile device, which can supply power to the mobile device and prolong a battery life of the mobile device, making it easier to use the mobile device for a long time.

In other embodiments, the power bank 43 may not have the patch cord 431, and only the corresponding connection port 433 is provided. To supply power to the mobile device, an independent cable or data cable that can achieve power supplying is used.

### Embodiment IV

For ease of understanding and description, in Embodiment IV of the present invention, solution content of the same parts as in Embodiment I will not be repeated, and differences will be described in detail.

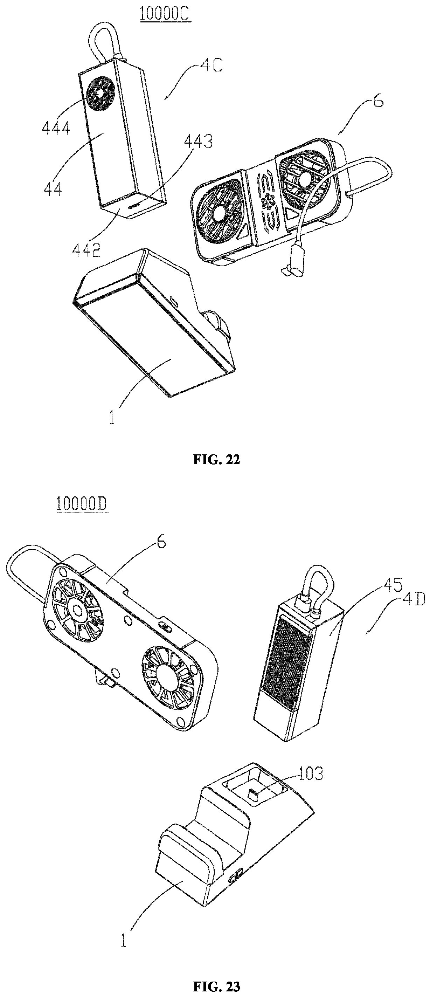

Referring to FIG. 21 and FIG. 22, FIG. 21 and FIG. 22 show exploded views of an expansion supporting device 10000C according to Embodiment IV in two angles. In this embodiment, the expansion supporting device 10000C includes an expansion base 1, a first expansion device 4C, and a second expansion device 6. The first expansion device 4C is a heat dissipation device 44. In this embodiment, the expansion base 1 and the second expansion device 6 are the same as those in Embodiment I, except that the first expansion device 4C has been changed.

**A** patch cord 441 is arranged at one end of the heat dissipation device 44, and a second connection interface 442 is arranged at the other end. The second connection interface 442 is connected to the first connection interface 103 of the expansion base 1. The second connection interface 442 is provided with a connection port 443 which is specifically a Type-c connection port and can be electrically connected to the Type-c port in the first connection interface 103, thereby supplying power to the expansion base 1 or taking power from the expansion device. The heat dissipation device 44 is provided with a heat dissipation fan 444. The heat dissipation fan 444 pushes an air flow towards the mobile device, thereby cooling a user, and also accelerates heat dissipation on the second expansion device 6.

When the first expansion device 4C is arranged on the expansion base 1, the patch cord 441 is connected to a port of the mobile device, so as to supply power to the mobile device or take power from the mobile device.

**In** other embodiments, the first expansion device 4 may not have the patch cord 441, and only the corresponding connection port 443 is provided. Only an independent cable or data cable that can achieve electrical connection is used.

### Embodiment V

For ease of understanding and description, in Embodiment V of the present invention, solution content of the same parts as in Embodiment I will not be repeated, and differences will be described in detail.

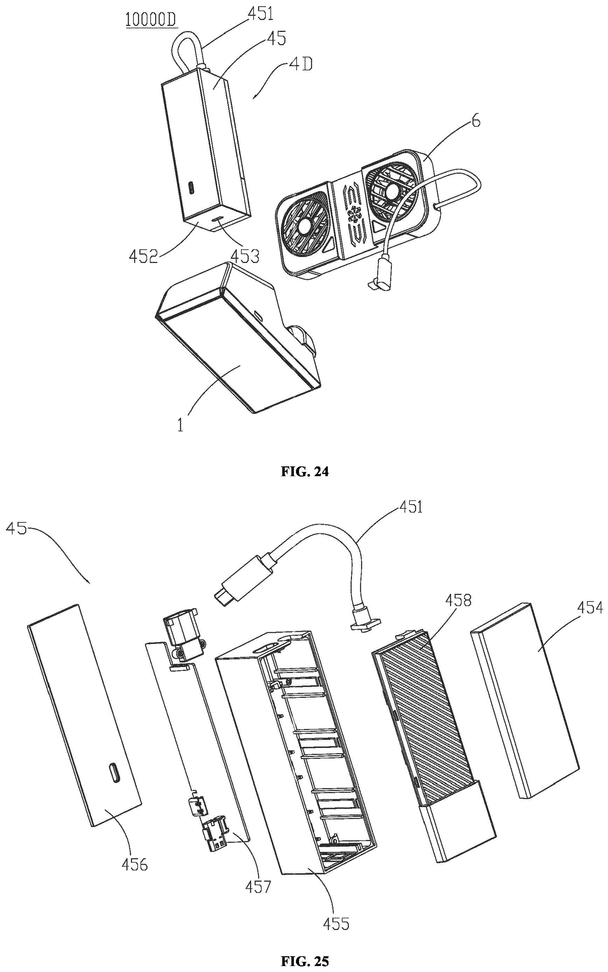

Referring to FIG. 23 and FIG. 24, FIG. 23 and FIG. 24 show exploded views of an expansion supporting device 10000D according to Embodiment V in two angles. In this embodiment, the expansion supporting device 10000D includes an expansion base 1, a first expansion device 4D, and a second expansion device 6. The first expansion device 4D is a lighting module 45. In this embodiment, the expansion base 1 and the second expansion device 6 are the same as those in Embodiment I, except that the first expansion device 4D has been changed.

A patch cord 451 is arranged at one end of the lighting module 45, and a second connection interface 452 is arranged at the other end. The second connection interface 452 is connected to the first connection interface 103 of the expansion base 1. The second connection interface 452 is provided with a connection port 453 which is specifically a Type-c connection port and can be electrically connected to the Type-c port in the first connection interface.

Referring to FIG. 25, the lighting module 45 includes a front shell 454, a middle frame 455, and a rear shell 456. The front shell 454 and the rear shell 456 are respectively connected to two opposite sides of the middle frame 455. The front shell 454, the middle frame 455, and the rear shell 456 are enclosed to form an accommodating cavity. The lighting module 45 further includes a third circuit board 457 and a second light-emitting element 458 electrically connected to the third circuit board 457. The third circuit board 457 and the second light-emitting element 458 are arranged in the accommodating cavity. Light emitted by the second light-emitting element 458 is directed towards the front shell 454. The front shell 454 is a transparent shell. The light emitted by the second light-emitting element 458 can pass through the front shell 454 to form a light shadow outside the lighting module 45, so that the first expansion device 4D has a dazzle light effect, which enhances the user experience.

When the lighting module 45 is assembled on the expansion base 1, the patch cord 451 is connected to a port of the mobile device, so that the lighting module 45 takes power and emits light. The lighting module 45 can also be powered and emit light through the expansion base 1.

**In** other embodiments, the lighting module 45 may not have the patch cord 451, and only the corresponding connection port 453 is provided. The patch cord 451 for taking power can be an independent patch cord 451 or an ordinary data cable, as long as it can achieve electrical connection.

### Embodiment VI

For ease of understanding and description, in Embodiment VI of the present invention, solution content of the same parts as in Embodiment I will not be repeated, and differences will be described in detail.

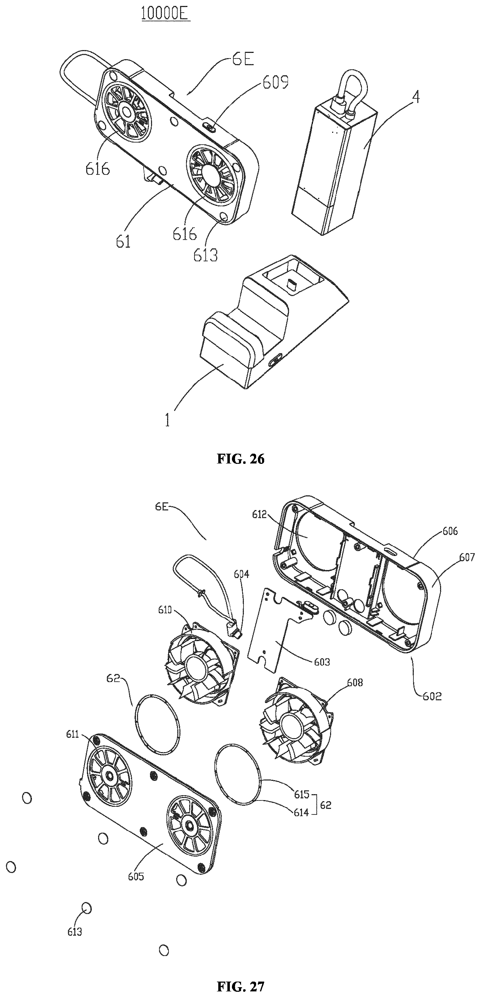

Referring to FIG. 26 and FIG. 27, FIG. 26 and FIG. 27 show exploded views of an expansion supporting device 10000E according to Embodiment VI. In this embodiment, the expansion supporting device 10000E includes an expansion base 1, a first expansion device 4, and a second expansion device 6E. The second expansion device 6E is a heat dissipation device 61. Specifically, the heat dissipation device 61 is provided with a lighting module 62. In this embodiment, the expansion base 1 and the first expansion device 4 are the same as those in Embodiment I, except that the second expansion device 6E has been changed. In this embodiment, the heat dissipation device 61 is detachably connected to the first expansion device 4 in the same connection manner as in Embodiment I.

Specifically, the heat dissipation device 61 includes a second housing 602, a second circuit board 603, and the fourth connection interface 604. The second circuit board 603 is entirely arranged inside the second housing 602, and the fourth connection interface 604 is electrically connected to the second circuit board 603. The second housing 602 includes a main supporting plate 605, a back supporting plate 606 opposite to the main supporting plate 605, and a side wall 607 connected between an edge of the main supporting plate 605 and an edge of the back supporting plate 606. The side wall 607 is of an annular structure.

The heat dissipation device 61 further includes the heat dissipation element 608 and a control button 609 which are arranged on the second housing 602. The control button 609 is electrically connected to the second circuit board 603 and is mounted in a button opening of the second housing 602 for user operation. The heat dissipation element 608 includes at least one heat dissipation fan 610. In this embodiment, two heat dissipation fans 610 are included. Each heat dissipation fan 610 is an axial flow fan. The heat dissipation fan 610 is arranged inside the second housing 602. The main supporting plate 605 is provided with a plurality of air outlets 611 corresponding to the heat dissipation fans 610. The back supporting plate 606 is provided with a plurality of air inlets 612 corresponding to the heat dissipation fans 610. The heat dissipation fans 610 are configured to guide an air flow from the air inlets 612 to the air outlets 611 for being discharged and bringing away heat of the mobile device. A plurality of decorative pieces 613 are arranged on an outer surface of the main supporting plate 605. The plurality of decorative pieces 613 are configured to: cover a screw or bolt that connects the main supporting plate 605 to the back supporting plate 606 and be in contact with a back portion of the mobile device, so that the outer surface of the main supporting plate 605 is close to or fitted to the mobile device, allowing the air flow to flow out through the air outlets 611 and bring away the heat of the mobile device. In other embodiments, there may be one, three, or more heat dissipation fans 610. Using the heat dissipation fans 610 to achieve cooling can reduce the costs of the product, thus improving the competitiveness of the product.

The lighting module 62 is arranged at the heat dissipation device 61. Specifically, the lighting module 62 includes third light-emitting elements 614 and a lamp panel 615. The third light-emitting elements 614 are a plurality of LEDs which are arranged on the lamp panel 615. The lamp panel 615 is electrically connected to the second circuit board 603. The lamp panel 615 is arranged inside the second housing 602 and is adjacent to the main supporting plate 605. Light-emitting sides of the LEDs face the main supporting plate 605, so that light emitted by the LEDs can be transmitted out of the heat dissipation device 61 through the main supporting plate 605. Specifically, the main supporting plate 605 is provided with a light-transmittance structure 616. The light emitted by the LEDs can be transmitted through the light-transmittance structure 616. In this embodiment, the light-transmittance structure 616 is a light-transmittance adhesive tape. In this embodiment, the light-transmittance structure 616 is arranged around the air outlets 611 on the main supporting plate 605. There are two transparent structures 616 which are respectively arranged around the air outlets 611 on the main supporting plate 605, so that the light emitted by the LEDs surrounds the vicinity of the air outlets 611. There are two lighting modules 62 which respectively correspond to the light-transmittance structures 616.

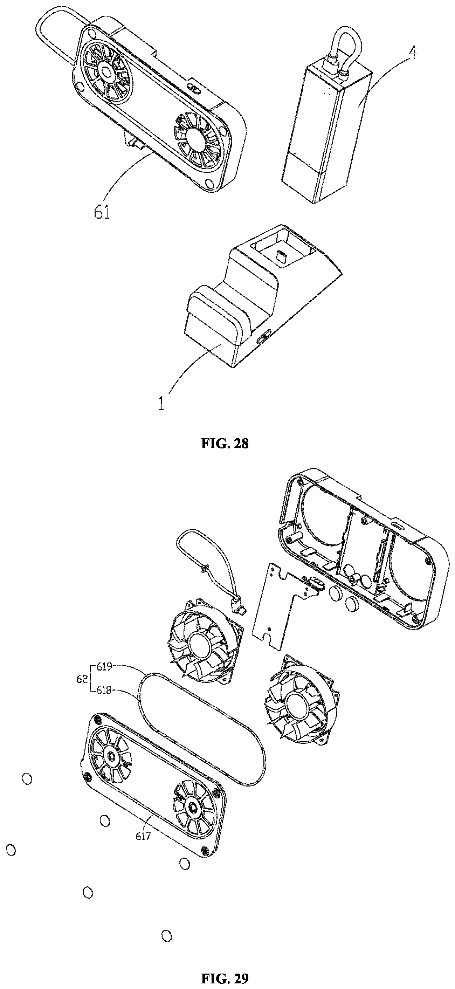

Referring to FIG. 28 and FIG. 29, in this change embodiment, there is one light-transmittance structure 617 arranged around an edge portion of the main supporting plate 605. There is one lighting module 62. The lighting module 62 includes third light-emitting elements 618 and a lamp panel 619. The third light-emitting elements 618 are a plurality of LEDs arranged on the lamp panel 619. The lamp panel 619 is electrically connected to the second circuit board 603. The lighting module 62 corresponds to the light-transmittance structure 617, so that the light emitted by the LEDs surrounds the entire main supporting plate 605.

### Embodiment VII

For ease of understanding and description, in Embodiment VII of the present invention, solution content of the same parts as in Embodiment I will not be repeated, and differences will be described in detail.

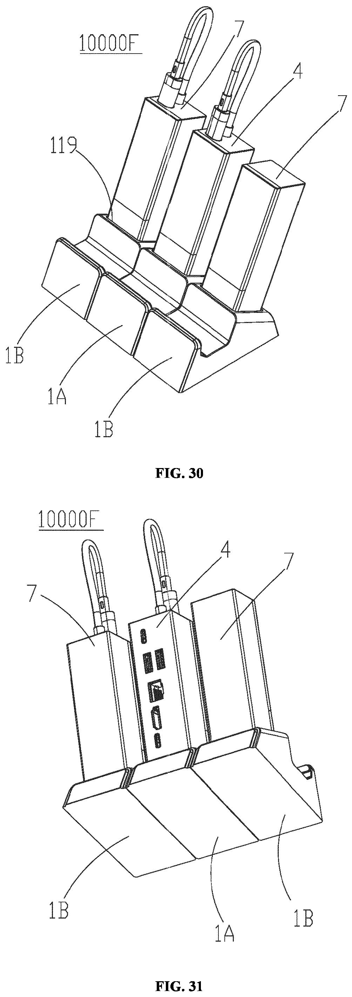

Referring to FIG. 30 and FIG. 31, FIG. 30 and FIG. 31 show three-dimensional diagrams of an expansion supporting device 10000F according to Embodiment VII in two angles. In this embodiment, the expansion supporting device 10000F includes a first expansion base 1A and a first expansion device 4. The structure of the first expansion device 4 is the same as that in Embodiment I. Parts of the first expansion base 1A that have the same structures as those in the expansion base 1 in Embodiment I will not be repeated, and different parts will be described in detail.

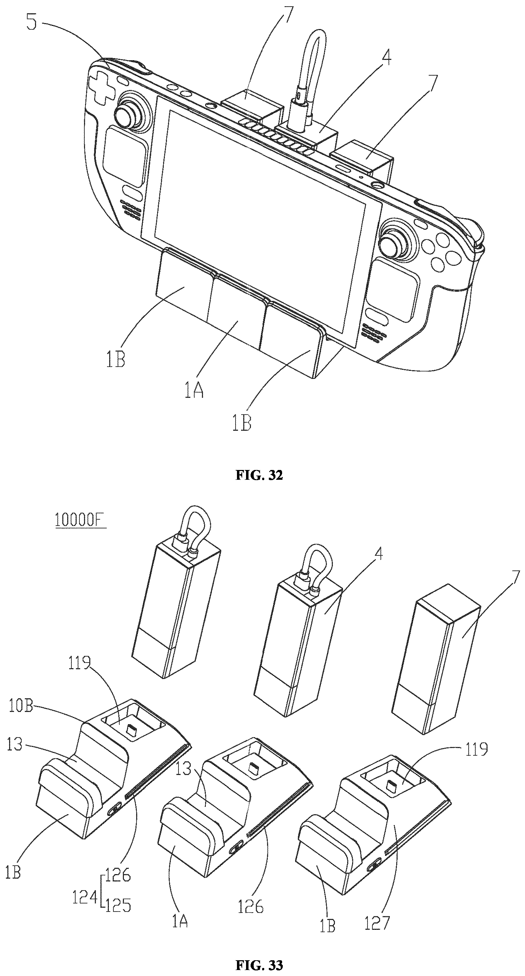

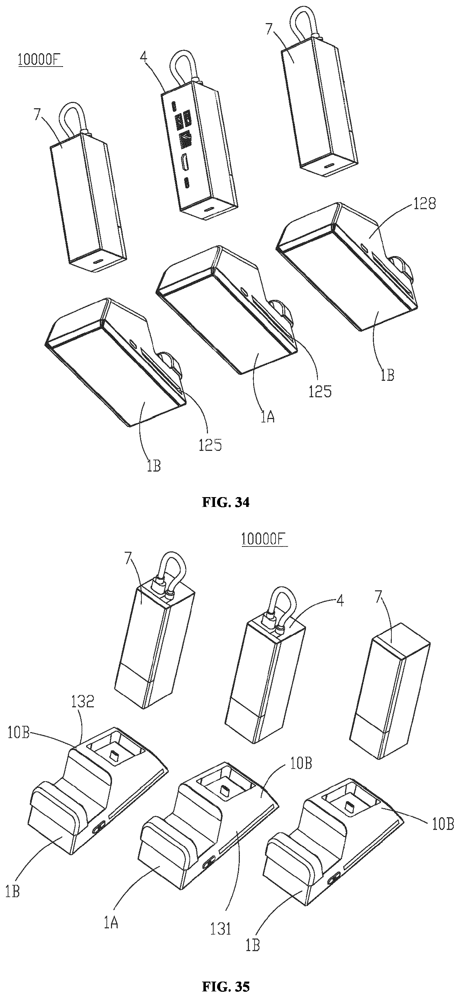

Referring to FIG. 33 and FIG. 34, in this embodiment, the expansion supporting device 10000F further includes a second expansion base 1B and a third expansion device 7. The first housing 10B of the second expansion base 1B further includes a second fixing portion 119. The second fixing portion 119 is configured to detachably assemble the third expansion device 7. When assembled on the second fixing portion 119, the third expansion device 7 can be coupled with the second expansion base 1B, so that the second expansion base 1B can take power from the third expansion device 7 or communicate with the third expansion device 7 to transmit data, or the second expansion base 1B can supply power to the third expansion device 7, or the second expansion base 1B can take power from the third expansion device 7 and communicate with the third expansion device 7 to transmit data, or the second expansion base 1B can supply power to the third expansion device 7 and communicate with the third expansion device 7 to transmit data.

Specifically, referring to FIG. 32, the first expansion base 1A and the second expansion base 1B are arranged side by side to jointly support the same mobile device 5. The structure of the first expansion base 1A and the structure of the second expansion base 1B are the same. The first expansion device 4 and the third expansion device 7 can be the same devices or different devices. In this embodiment, the first expansion device 4 is a docking station, and the second expansion device 6 is a power bank. In other embodiments, both the first expansion device 4 and the second expansion device 6 can be power banks or other devices. Each of the first expansion device 4 and the second expansion device 6 can be one of a docking station, a storage device, a power bank, lighting module, and a heat dissipation and lighting module. They can be freely combined and used as needed.

In this embodiment, two second expansion bases 1B are taken as an example for explanation. There are two third expansion devices 7. The first expansion base 1A and the two second expansion bases 1B are arranged side by side to jointly support the same mobile device 5. Specifically, the first expansion base 1A is communicated to the placement portions 13 of the two second expansion bases 1B to jointly support the mobile device 5. The first expansion base 1A and the two second expansion bases 1B can be connected to the first expansion device 4 (docking station) and the two third expansion devices 7 (power banks), to prolong the battery life of the mobile device 5 and improve the functionality of the mobile device 5, or can be connected to the first expansion device 4 (docking station), one third expansion device 7 (power bank), and one third expansion device 7 (storage device) to prolong the battery life of the mobile device 5, store data, and add functions. The first expansion base 1A and the second expansion bases 1B can be freely combined and used with the first expansion device 4 and a plurality of third expansion devices 7.

Referring to FIG. 33 and FIG. 34, in this embodiment, the structure of the first expansion base 1A and the structure of each second expansion base 1B are the same. A difference between the first expansion base 1A and the expansion base 1 in Embodiment I is that the first expansion base 1A further includes a clamping structure 124. The clamping structure 124 is arranged on the first side plate 127 and the second side plate 128. The clamping structure 124 includes a clamping slot 125 and a clamping protrusion 126. The clamping slot 125 is arranged on the first side plate 127, and the clamping protrusion 126 is arranged on the second side plate 128. When the first expansion base 1A and the second expansion base 1B are connected side by side for use, the clamping protrusion 126 of the first expansion base 1A is clamped to the clamping slot 125 of the second expansion base 1B, or the clamping slot 125 of the first expansion base 1A is clamped to the clamping protrusion 126 of the second expansion base 1B, thereby achieving side-by-side connection between the first expansion base 1A and the second expansion base 1B. When the first expansion base 1A and the second expansion base 1B are used side by side, they can be connected together without separation, thus facilitating use.

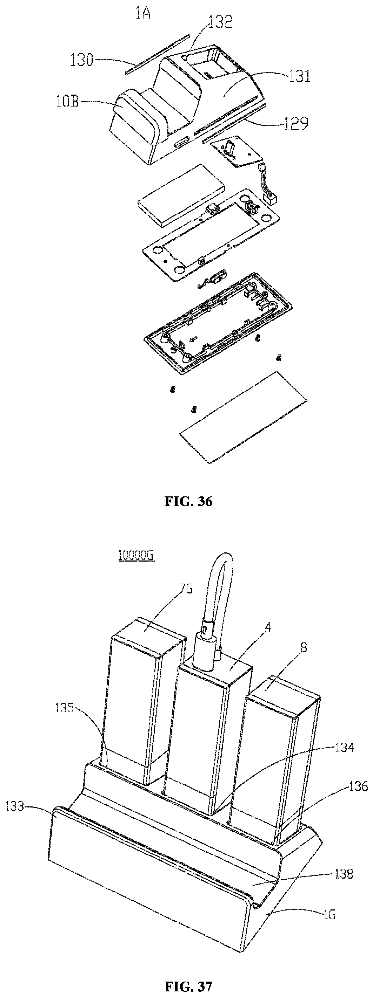

Referring to FIG. 35 and FIG. 36, FIG. 35 and FIG. 36 show schematic structural diagrams of an expansion supporting device shown in a change embodiment of Embodiment VII of the present invention. In this change embodiment, the structure of the first expansion base 1A and the structure of the second expansion base 1B are the same. A difference between the first expansion base 1A and the expansion base 1 in Embodiment I is that the first expansion base 1A further includes a first magnet 129 and a second magnet 130. The first magnet 129 and the second magnet 130 are arranged inside the first housing 10B, and are respectively adjacent to the first side plate 131 and the second side plate 132. When the first expansion base 1A and the second expansion base 1B are arranged side by side, the first magnet 129 inside the first expansion base 1A and the second magnet 130 inside the second expansion base 1B are magnetically sucked, or the second magnet 130 in the first expansion base 1A and the first magnet 129 in the second expansion base 1B are magnetically sucked, thereby achieving the connection between the first expansion base 1A and the second expansion base 1B. Thus, when the first expansion base 1A and the second expansion base 1B are used side by side, they can be connected together without separation, thus facilitating use.

In other embodiments, the first magnet and the second magnet can be used as a first side plate and a second side plate to be directly connected to the bottom plate, the front plate, the rear plate, and the top plate of the expansion base.

### Embodiment VIII

For ease of understanding and description, in Embodiment VIII of the present invention, solution content of the same parts as in Embodiment I will not be repeated, and differences will be described in detail.

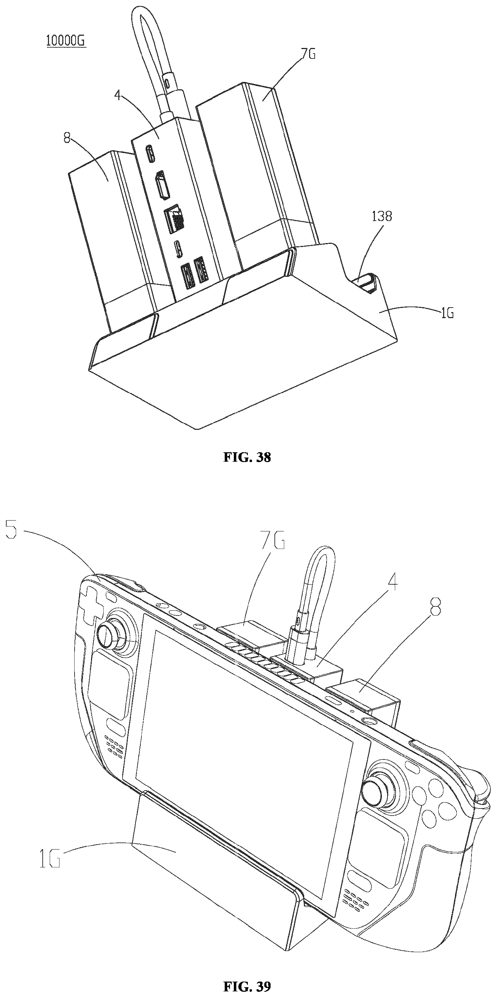

Referring to FIG. 37 and FIG. 38, FIG. 37 and FIG. 38 show three-dimensional diagrams of an expansion supporting device 10000G according to Embodiment VIII in two angles. In this embodiment, the expansion supporting device 10000G includes a first expansion base 1G, a first expansion device 4, a third expansion device 7G, and a fourth expansion device 8. The structure of the first expansion device 4 is the same as that in Embodiment I.

A difference between the first expansion base 1G and the expansion base 1 in Embodiment I is that the first expansion base 1G includes a first housing 133. The first housing 133 is provided with a first fixing portion 134, a second fixing portion 135, and a third fixing portion 136. The first fixing portion 134, the second fixing portion 135, and the third fixing portion 136 are arranged side by side, and the first fixing portion 134, the second fixing portion 135, and the third fixing portion 136 are correspondingly detachably connected to the first expansion device 4, the third expansion device 7G, and the fourth expansion device 8, respectively. The first fixing portion 134, the second fixing portion 135, and the third fixing portion 136 are respectively provided with connectors 12g. The three connectors12g are respectively in electrical connection and/or communicative connection to the first expansion device 4, the third expansion device 7G, and the fourth expansion device 8. The first housing 133 is further provided with a placement portion 138 for placing a mobile device. The first housing 133 is integrally formed. Specifically, referring to FIG. 39, a reference diagram of a usage state of the expansion supporting device 10000G shown in Embodiment VIII of the present invention is shown. The first expansion base 1G further includes a control circuit board 139 arranged inside the first housing 133, and the control circuit board 139 is electrically connected to the connectors 12g.

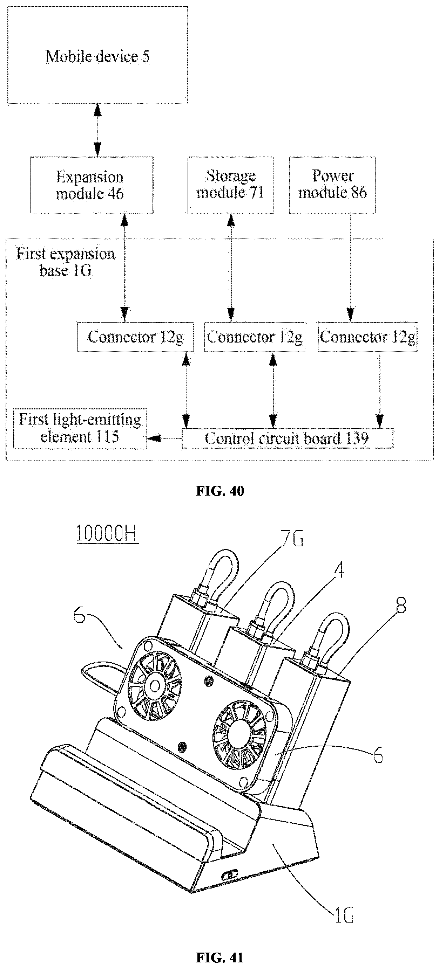

Referring to FIG. 40, at least one of the first expansion device 4, the third expansion device 7G, and the fourth expansion device 8 is an expansion module 46. The expansion module 46 is plugged into one of the first fixing portion 134, the second fixing portion 135, and the third fixing portion 136, such as the first fixing portion 134, and is coupled with it. The expansion module 46 is configured to add connection ports for the mobile device 5. The expansion module 46 is provided with a plurality of connection ports of different types and specifications, such as an HDMI connection port, a video connection port DisplayPort, a USB-A data transmission port, a Gigabit Ethernet port, and audio connection port. The first expansion device 4, the third expansion device 7G, and the fourth expansion device 8 further at least includes a functional module. The functional module is plugged into another one among the first fixing portion 134, the second fixing portion 135, and the third fixing portion 136, such as the second fixing portion 135, and is coupled with it. The functional module is indirectly coupled with the expansion module 46 through the control circuit board 139 by being coupled with the control circuit board 139 through the second fixing portion 135 for example. The functional module is coupled with the mobile device 5 to achieve connection port expansion on the mobile device 5 and function expansion on the mobile device 5. The functional module can also achieve function expansion on the first expansion base 1G.

The functional module can be one or more of a power module 81, a storage module 71, or a heat dissipation module. The power module 81 can supply power to the mobile device 5 or other functional components. The storage module 71 is configured to expand an internal memory of the mobile device 5. The heat dissipation module is configured to dissipate heat from the mobile device 5. In this embodiment, the first expansion device 4, the third expansion device 7G, and the fourth expansion device 8 can respectively be a docking station, a storage device (storage module 71), and a power bank (power module 81).

The first housing 133 is provided with the first fixing portion 134, the second fixing portion 135, and the third fixing portion 136, which can achieve coupling and plugging on three expansion devices. There is one expansion module 46 and two functional modules, one of which is the storage module 71 and the other one of which is the power module 81. The expansion module 46 is directly coupled with the mobile device, and the power module 81 and the storage module 71 are indirectly coupled with the mobile device. The expansion module 46 is provided with a patch cord. The patch cord is plugged into the mobile device 5 to achieve the coupling between expansion module 46 and the mobile device 5.

When the power module 81 needs to transmit a current to the mobile device 5, the current first directly reaches the control circuit board 139 through the first fixing portion 134, the second fixing portion 135, or the third fixing portion 136. The control circuit board 139 then transmits the current to the expansion module 46 through the first fixing portion 134, the second fixing portion 135, or the third fixing portion 136 corresponding to the expansion module 46. The expansion module 46 finally transmits the current to the mobile device 5 to charge the mobile device 5. The control circuit board 139 can further transmit the current to the first light-emitting element 115 to enable the first light-emitting element 115 in the first expansion base 1G to emit light.

When the heat dissipation module needs to operate, the power module 81 can first transmit the current to the control circuit board 139 through the first fixing portion 134, the second fixing portion 135, or the third fixing portion 136. The control circuit board 139 then transmits the current to the heat dissipation module through the first fixing portion 134, the second fixing portion 135, or the third fixing portion 136 corresponding to the heat dissipation module, to achieve the operation of the heat dissipation module. Alternatively, a current can be transmitted to the expansion module 46 through a built-in power source of the mobile device 5. The expansion module 46 then transmits the current to the control circuit board 139 through the first fixing portion 134, the second fixing portion 135, or the third fixing portion 136. The control circuit board 139 then transmits the current to the heat dissipation module through the first fixing portion 134, the second fixing portion 135, or the third fixing portion 136 corresponding to the heat dissipation module, to achieve the operation of the heat dissipation module.

When the mobile device 5 needs to extract information data from the storage module 71, the storage module 71 sends the information data to the control circuit board 139 through the first fixing portion 134, the second fixing portion 135, or the third fixing portion 136. The control circuit board 139 then transmits the information data to the expansion module 46 through the first fixing portion 134, the second fixing portion 135, or the third fixing portion 136 corresponding to the expansion module 46. The expansion module 46 sends the information data to the mobile device 5, to extract the information data extraction of the mobile device 5. When the mobile device 5 needs to store the information data to the storage module 71, a built-in memory of the mobile device 5 transmits the information data to the expansion module 46. The expansion module 46 transmits the information data to the control circuit board 139 through the first fixing portion 134, the second fixing portion 135, or the third fixing portion 136. The control circuit board 139 then transmits the information data to the storage module 71 through the first fixing portion 134, the second fixing portion 135, or the third fixing portion 136 corresponding to the storage module 71, to store the information data of the mobile device 5.

In this embodiment, the expansion module 46 is the first expansion device 4, which is a docking station. The storage module 71 is the third expansion device 7G, which is a hard disk drive box (storage device). The power module 81 is the fourth expansion device 8, which is a battery (power bank).

### Embodiment IX

For ease of understanding and description, in Embodiment IX of the present invention, solution content of the same parts as in Embodiment VIII will not be repeated, and differences will be described in detail.

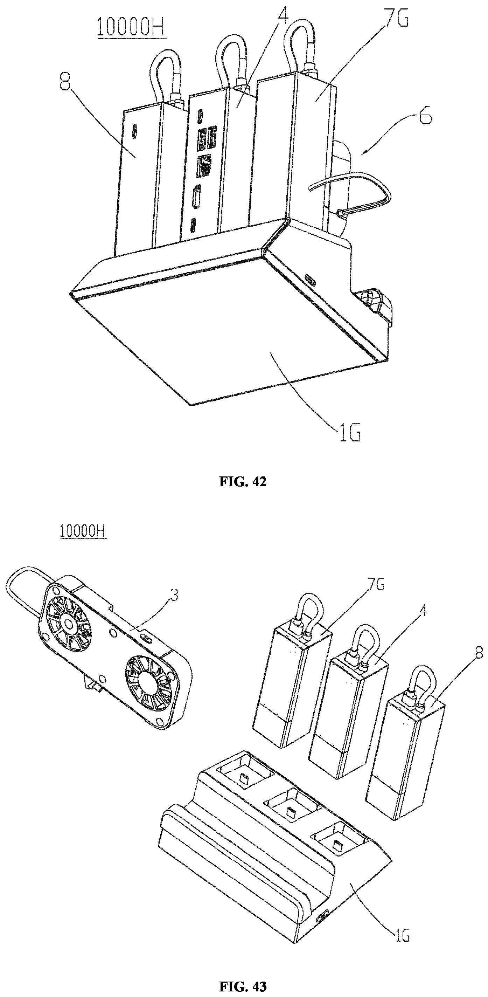

Referring to FIG. 41 and FIG. 42, FIG. 41 and FIG. 42 show three-dimensional diagrams of an expansion supporting device 10000H according to Embodiment IX in two angles.

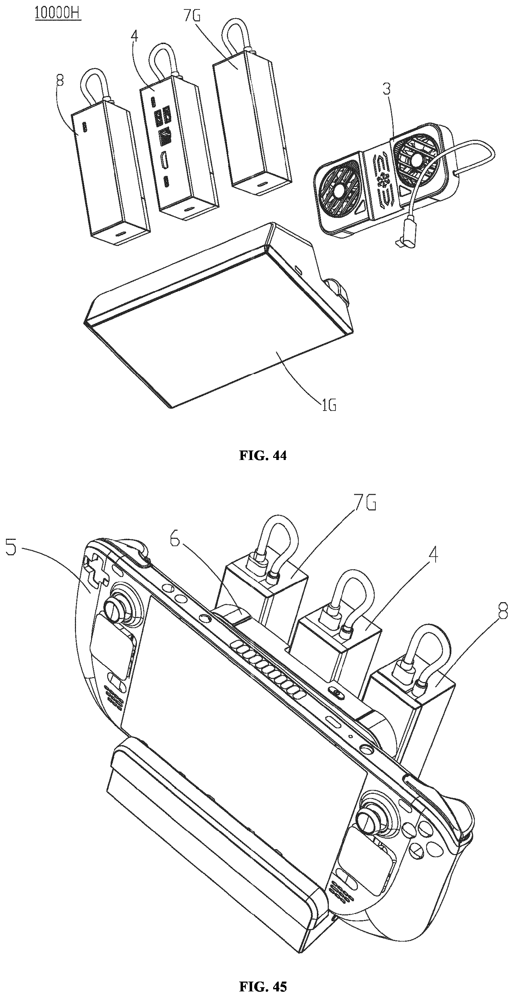

Referring to FIG. 43 and FIG. 44, in this embodiment, the expansion supporting device 10000H includes a first expansion base 1G, a first expansion device 4, a second expansion device 6, a third expansion device 7G, and a fourth expansion device 8. The structures of the first expansion base 1G, the first expansion device 4, the third expansion device 7G, and the fourth expansion device 8 are the same as those in Embodiment VIII, and the second expansion device 6 is the same as that in Embodiment I, which is a heat dissipation device 63. The first expansion device 4, the third expansion device 7G, and the fourth expansion device 8 are respectively detachably connected to the first expansion base 1G. The second expansion device 6 is arranged on sides of the first expansion device 4, the third expansion device 7G, and the fourth expansion device 8 facing the mobile device, that is, the second expansion device 6 is arranged between the mobile device and the first expansion device 4, the third expansion device 7G, and the fourth expansion device 8. Referring to FIG. 45, FIG. 45 is a reference diagram of the usage state of an expansion supporting device shown in Embodiment IX of the present invention.

### Embodiment X

For ease of understanding and description, in Embodiment X of the present invention, solution content of the same parts as in Embodiment I will not be repeated, and differences will be described in detail.

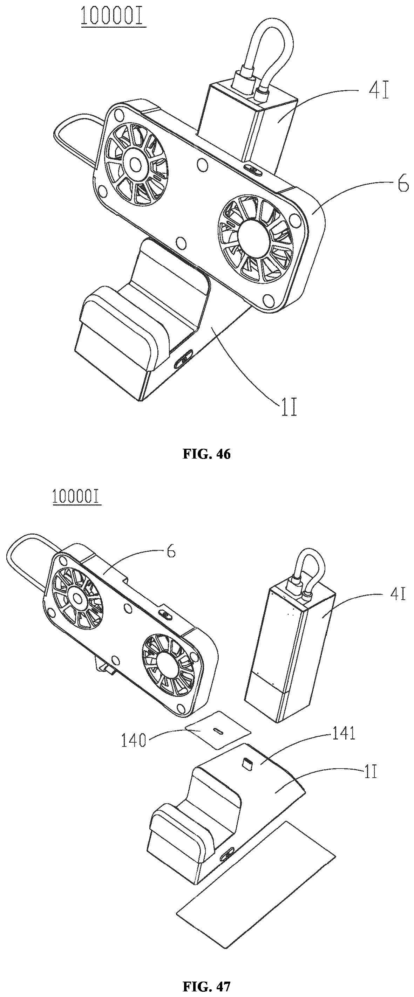

Referring to FIG. 46, FIG. 46 shows a three-dimensional diagram of an expansion supporting device 10000I according to Embodiment X. In this embodiment, the expansion supporting device 10000I includes an expansion base 1I, a first expansion device 4I, and a second expansion device 6. The second expansion device 6 in this embodiment is the same as that in Embodiment I.

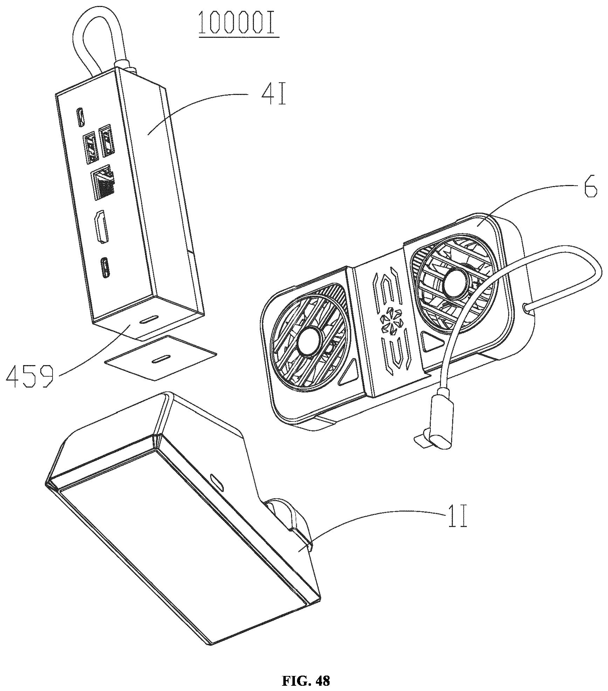

Referring to FIG. 47 and FIG. 48, in this embodiment, the expansion base 1I is connected to the first expansion device 4I through a magnetic suction connection structure. The expansion base 1I further includes a first magnetic member 140. The first magnetic member 140 is arranged on the first fixing portion 141. The first magnetic member 140 is configured to magnetically cooperate with a second magnetic member 459 on the first expansion device 4I to fix the first expansion device 4I to the first fixing portion 141. When the first expansion device 4I is arranged at the first fixing portion 141 of the expansion base 1I, the first magnetic member 140 and the second magnetic member 459 are magnetically sucked to each other to achieve connection, thereby fixing the first expansion device 4I to the first fixing portion 141.

As described above, one or more embodiments are provided in conjunction with the detailed description, The specific implementation of the present invention is not confirmed to be limited to that the description is similar to or similar to the method, the structure and the like of the present invention, or a plurality of technical deductions or substitutions are made on the premise of the conception of the present invention to be regarded as the protection of the present invention.

## Claims

1. An expansion base, **characterized by** comprising:
a first housing (10, 10B, 133), wherein the first housing (10, 10B, 133) comprises a first fixing portion (101, 134, 141) and a placement portion (13, 138), the placement portion (13, 138) is configured to place a mobile device (5) obliquely or vertically;
a first circuit board (102) located in the first housing (10);
a first connection interface (103), and
at least one expansion device (2), wherein the first fixing portion (101, 134, 141) is configured to detachably assemble the at least one expansion device (2);
wherein the first connection interface (103) is electrically connected to the first circuit board (102);the first connection interface (103) is arranged on the first fixing portion (101, 134, 141); when the at least one expansion device (2) is assembled on the first fixing portion (101, 134, 141), the first connection interface (103) is configured to be coupled with a second connection interface (401, 422, 432, 442, 453) of the at least one expansion device (2), whereby the expansion base (1, 1I) is configured to take power from the at least one expansion device (2), to supply power to the at least one expansion device (2), and/or to communicate with the at least one expansion device (2) for transmitting data; and
wherein the at least one expansion device (2) comprises a first expansion device (4, 4A, 4B, 4C, 4D, 4I) and a second expansion device (6, 6E), the second connection interface (401, 422, 432, 442, 453) is arranged on the first expansion device (4, 4A, 4B, 4C, 4D, 4I), the first expansion device (4, 4A, 4B, 4C, 4D, 4I) is one of a docking station (41) provided with a plurality of connection ports; a storage device (42) and a power bank(43), the second expansion device (6, 6E) is one of a heat dissipation device (63, 44, 61) or a heat dissipation, or lighting module; and the second expansion device (6, 6E) is configured to be arranged between the mobile device (5) and the first expansion device (4, 4A, 4B, 4C, 4D, 4I).

2. The expansion base according to claim 1, **characterized in that** expansion base (1, 1I) further comprises a third connection interface (104), the third connection interface (104) is electrically connected to the first circuit board (102), the third connection interface (104) is configured to be coupled with a fourth connection interface (601) of the second expansion device (6, 6E), whereby the expansion base (1, 1I) supplies power to the second expansion device (6, 6E) or transmits data with the second expansion device (6, 6E) through the third connection interface (104).

3. The expansion base according to claim 1, **characterized in that** the at least one expansion device (2) further comprises a third expansion device (7, 7G);
the first housing (10, 10B, 133) further comprises a second fixing portion (119, 135); the second fixing portion (119, 135) is detachably assembled on the third expansion device (7, 7G), when the third expansion device (7, 7G) is assembled on the second fixing portion (119, 135), thereby the third expansion device (7, 7G) is coupled with the expansion base (1, 1I), whereby the expansion base (1, 1I) takes power from the third expansion device (7, 7G), to supply power to the third expansion device (7, 7G), and/or to communicate with the third expansion device (7, 7G)for transmitting data.

4. The expansion base according to claim 1, **characterized in that** the first fixing portion (101, 134, 141) comprises a plug-in slot, a bottom wall of the plug-in slot comprises an opening for exposing a port component (123) of the first connection interface (103), and the plug-in slot is configured to store and fix one end of the first expansion device (4, 4A, 4B, 4C, 4D, 4I).

5. The expansion base according to claim 1, **characterized in that** the expansion base (1, 1I) further comprises a first magnetic member (140), the first magnetic member (140) is arranged on the first fixing portion (101, 134, 141), the first magnetic member (140) is configured to magnetically cooperate with a second magnetic member (459) on the first expansion device (4, 4A, 4B, 4C, 4D, 4I), whereby the first expansion device (4, 4A, 4B, 4C, 4D, 4I) is fixed on the first fixing portion (101, 134, 141).

6. The expansion base according to claim 1, **characterized in that** the first housing (10) comprises a bottom plate (105), a front plate (106), a rear plate (107), a first side plate (108), a second side plate (109), and a top plate (110);
the front plate (106) is connected to the bottom plate (105);
the rear plate (107) is connected to the bottom plate (105) and is opposite to the front plate (106);
the first side plate (108) is connected to the bottom plate (105), the front plate (106) and the rear plate (107); the second side plate (109) is opposite to the first side plate (108) and is connected to the bottom plate (105), the front plate (106) and the rear plate (107);
the placement portion (13) is connected to the front plate (106), the first side plate (108) and the second side plate (109);
the top plate (110) is connected between the placement portion (13) and the rear plate (107), the top plate (110) is connected to the first side plate (108) and the second side plate (109);
the bottom plate (105) is configured to be placed on an external supporting surface;
the first fixing portion (101, 134, 141) is arranged on the top plate (110), and the first connection interface (103) is arranged on the top plate (110).

7. The expansion base according to claim 6, **characterized in that** the front plate (106) is connected to the bottom plate (105) at an acute angle;
the rear plate (107) is connected to the bottom plate (105) at an acute angle;
the placement portion (13) comprises a rear supporting plate (111) connected to the top plate (110), a bottom bearing plate (112) connected to the rear supporting plate (111), a front supporting plate (113) connected to the bottom bearing plate (112), and a limiting plate (14);
the rear supporting plate (111) is connected to the bottom bearing plate (112) at an obtuse angle;
the limiting plate (14) is connected between the front supporting plate (113) and the front plate (106);
the front supporting plate (113) is connected to the bottom bearing plate (112) at an obtuse angle;
the front supporting plate (113) is connected to the limiting plate (14) at an obtuse angle, and the bottom plate (105) and the bottom bearing plate (112) are configured parallel to each other.

8. The expansion base according to claim 6, **characterized in that** the expansion base (1, 1I) further comprises a built-in battery (114), the built-in battery (114) is arranged inside the first housing (10) and is electrically connected to the first circuit board (102).

9. The expansion base according to claim 1, **characterized in that** the expansion base (1A, 1I) further comprises a third connection interface (104), the third connection interface (104) is electrically connected to the first circuit board (102);
the third connection interface (104) is configured to be coupled with a fourth connection interface (601) of the second expansion device (6, 6E), whereby the first expansion base (1A, 1G) supplies power to the second expansion device (6) or transmits data with the second expansion device (6, 6E) through the third connection interface (104);
the second expansion device (6, 6E) comprises a second housing (301, 602), a second circuit board (302, 603) and the second connection interface (401, 422, 432, 442, 453), the second circuit board (302, 603) is arranged inside in the second housing (301, 602);
the fourth connection interface (601) is electrically connected to the second circuit board (302, 603);
the second housing (301, 602) comprises a main supporting plate (303, 605), a back supporting plate (304, 606) opposite to the main supporting plate (303, 605), and a sidewall (313) connected between an edge of the main supporting plate (303, 605) and an edge of the back supporting plate (304, 606).

10. The expansion base according to claim 9, **characterized in that** the second expansion device (6, 6E) comprises a heat dissipation device (63, 44, 61), the heat dissipation device (63, 44, 61) further comprises a heat dissipation element (34, 608) and a control button (306, 609) which are arranged on the second housing (301, 602);
the control button (306, 609) is electrically connected to the second circuit board (302, 603) and mounted in a button opening of the second housing (301, 602) for user operation;
the heat dissipation element (34, 608) comprises at least one heat dissipation fan (31, 444, 610), the at least one heat dissipation fan (31, 444, 610) is arranged in the second housing (301, 602);
the main supporting plate (303, 605) is provided with a plurality of air outlets (307, 611) corresponding to the at least one heat dissipation fan (31, 444, 610);
the back supporting plate (304, 606) is provided with a plurality of air inlets (308, 612) corresponding to the heat dissipation fan (31, 444, 610);
and the at least one heat dissipation fan (31, 444, 610) is configured to conduct the heat from the air inlets (308) to the air outlets (307, 611), whereby discharging and bringing away heat generated by the mobile device (5).

11. The expansion base according to claim 9, **characterized in that** the back supporting plate (304, 606) is provided with a mounting structure (309);
the mounting structure (309) is configured to be connected and fixed with the first expansion device (4);
the back supporting plate (304, 606) comprises a main body portion (310), a groove portion (311), and two guide portions (312), at least part of the first expansion device (4) is stored and fixed in a mounting groove (32) of the groove portion (311);
the guide portions (312) are connected between the main body portion (310) and two sidewalls (313) of the groove portion (311);
a distance between the two guide portions (312) is greater than a distance between the two side walls (313) of the groove portion (311), whereby at least part of the first expansion device (4, 4A, 4B, 4C, 4D, 4I) to extend into the groove portion (311).

12. The expansion base according to claim 9, **characterized in that** when the second expansion device (6, 6E) is placed on the first fixing portion (101, 134, 141) and is coupled with the expansion base (1, 1I), an outer surface of the main supporting plate (303) is coplanar with the supporting surface of the placement portion (13, 138) for supporting the mobile device (5).

13. The expansion base according to claim 9, **characterized in that** the second expansion device (6, 6E) further comprises a plurality of light-emitting elements;
the plurality of light-emitting elements are arranged inside the second housing (301, 602) and are electrically connected to the second circuit board (302, 603), and light emitted by the plurality of light-emitting elements passes through the second housing (301, 602) and is emitted to the outside of the second expansion device (6, 6E) to form a lighting effect.

14. The expansion base according to claim 9, **characterized in that** the expansion base is a first expansion base (1A, 1G), and a second expansion base (1B) is further provided; a structure of the second expansion base (1B) and a structure of the first expansion base (1A, 1G) are the same; the first expansion base (1A, 1G) and the second expansion base (1B) are arranged side by side to jointly support the same mobile device (5);
the first expansion base (1A, 1G) and the second expansion base (1B) are connected integrally through a buckle connection structure or a magnetic suction connection structure; and when the first expansion base (1A, 1G) and the second expansion base (1B) are connected integrally, the placement portion (13, 138) of the first expansion base (1A, 1G) and the placement portion (13, 138) of the second expansion base (1B) are aligned and connected.

## Patentansprüche

1. Eine Expansionsbasis, **dadurch gekennzeichnet, dass** sie Folgendes umfasst:
ein erstes Gehäuse (10, 10B, 133), wobei das erste Gehäuse (10, 10B, 133) einen ersten Befestigungsabschnitt (101, 134, 141) und einen Platzierungsabschnitt (13, 138) umfasst, und wobei der Platzierungsabschnitt (13, 138) konfiguriert ist, um ein mobiles Gerät (5) schräg oder vertikal zu platzieren;
eine erste Leiterplatte (102), die sich in dem ersten Gehäuse (10) befindet; eine erste Verbindungsschnittstelle (103), und
mindestens eine Expansionsvorrichtung (2), wobei der erste Befestigungsabschnitt (101, 134, 141) konfiguriert ist, um die mindestens eine Expansionsvorrichtung (2) lösbar zu montieren;
wobei die erste Verbindungsschnittstelle (103) elektrisch mit der ersten Leiterplatte (102) verbunden ist; die erste Verbindungsschnittstelle (103) an dem ersten Befestigungsabschnitt (101, 134, 141) angeordnet ist; wenn die mindestens eine Expansionsvorrichtung (2) an dem ersten Befestigungsabschnitt (101, 134, 141) montiert ist, die erste Verbindungsschnittstelle (103) konfiguriert ist, um mit einer zweiten Verbindungsschnittstelle (401, 422, 432, 442, 453) der mindestens einen Expansionsvorrichtung (2) gekoppelt zu werden, wodurch die Expansionsbasis (1, 11) konfiguriert ist, um Strom von der mindestens einen Expansionsvorrichtung (2) aufzunehmen, die mindestens eine Expansionsvorrichtung (2) mit Strom zu versorgen, und/oder mit der mindestens einen Expansionsvorrichtung (2) zum Übertragen von Daten zu kommunizieren; und
wobei die mindestens eine Expansionsvorrichtung (2) eine erste Expansionsvorrichtung (4, 4A, 4B, 4C, 4D, 4I) und eine zweite Expansionsvorrichtung (6, 6E) umfasst, die zweite Verbindungsschnittstelle (401, 422, 432, 442, 453) an der ersten Expansionsvorrichtung (4, 4A, 4B, 4C, 4D, 4I) angeordnet ist, die erste Expansionsvorrichtung (4, 4A, 4B, 4C, 4D, 4I) eines von einer Dockingstation (41), die mit einer Vielzahl von Verbindungsanschlüssen versehen ist, einer Speichervorrichtung (42) und einer Powerbank (43) ist, die zweite Expansionsvorrichtung (6, 6E) eines von einer Wärmeableitungsvorrichtung (63, 44, 61) oder einem Wärmeableitungs- oder Beleuchtungsmodul ist; und die zweite Expansionsvorrichtung (6, 6E) konfiguriert ist, um zwischen dem mobilen Gerät (5) und der ersten Expansionsvorrichtung (4, 4A, 4B, 4C, 4D, 4I) angeordnet zu sein.

2. Die Expansionsbasis nach Anspruch 1, **dadurch gekennzeichnet, dass** die Expansionsbasis (1, 1I) ferner eine dritte Verbindungsschnittstelle (104) umfasst, wobei die dritte Verbindungsschnittstelle (104) elektrisch mit der ersten Leiterplatte (102) verbunden ist, die dritte Verbindungsschnittstelle (104) konfiguriert ist, um mit einer vierten Verbindungsschnittstelle (601) der zweiten Expansionsvorrichtung (6, 6E) gekoppelt zu werden, wodurch die Expansionsbasis (1, 1I) die zweite Expansionsvorrichtung (6, 6E) mit Strom versorgt oder Daten mit der zweiten Expansionsvorrichtung (6, 6E) über die dritte Verbindungsschnittstelle (104) überträgt.

3. Die Expansionsbasis nach Anspruch 1, **dadurch gekennzeichnet, dass** die mindestens eine Expansionsvorrichtung (2) ferner eine dritte Expansionsvorrichtung (7, 7G) umfasst;
das erste Gehäuse (10, 10B, 133) ferner einen zweiten Befestigungsabschnitt (119, 135) umfasst; der zweite Befestigungsabschnitt (119, 135) lösbar an der dritten Expansionsvorrichtung (7, 7G) montiert ist, wenn die dritte Expansionsvorrichtung (7, 7G) an dem zweiten Befestigungsabschnitt (119, 135) montiert ist, wodurch die dritte Expansionsvorrichtung (7, 7G) mit der Expansionsbasis (1, 1I) gekoppelt ist, wodurch die Expansionsbasis (1, 1I) Strom von der dritten Expansionsvorrichtung (7, 7G) aufnimmt, um die dritte Expansionsvorrichtung (7, 7G) mit Strom zu versorgen, und/oder mit der dritten Expansionsvorrichtung (7, 7G) zum Übertragen von Daten kommuniziert.

4. Die Expansionsbasis nach Anspruch 1, **dadurch gekennzeichnet, dass** der erste Befestigungsabschnitt (101, 134, 141) einen Einsteckschlitz umfasst, eine Bodenwand des Einsteckschlitzes eine Öffnung zum Freilegen einer Portkomponente (123) der ersten Verbindungsschnittstelle (103) umfasst, und der Einsteckschlitz konfiguriert ist, um ein Ende der ersten Expansionsvorrichtung (4, 4A, 4B, 4C, 4D, 4I) aufzunehmen und zu fixieren.

5. Die Expansionsbasis nach Anspruch 1, **dadurch gekennzeichnet, dass** die Expansionsbasis (1, 1I) ferner ein erstes magnetisches Element (140) umfasst, wobei das erste magnetische Element (140) an dem ersten Befestigungsabschnitt (101, 134, 141) angeordnet ist, das erste magnetische Element (140) konfiguriert ist, um magnetisch mit einem zweiten magnetischen Element (459) an der ersten Expansionsvorrichtung (4, 4A, 4B, 4C, 4D, 4I) zusammenzuwirken, wodurch die erste Expansionsvorrichtung (4, 4A, 4B, 4C, 4D, 4I) an dem ersten Befestigungsabschnitt (101, 134, 141) fixiert ist.

6. Die Expansionsbasis nach Anspruch 1, **dadurch gekennzeichnet, dass** das erste Gehäuse (10) eine Bodenplatte (105), eine Frontplatte (106), eine Rückplatte (107), eine erste Seitenplatte (108), eine zweite Seitenplatte (109) und eine obere Platte (110) umfasst, wobei
die Frontplatte (106) mit der Bodenplatte (105) verbunden ist;
die Rückplatte (107) mit der Bodenplatte (105) verbunden ist und der Frontplatte (106) gegenüberliegt;
die erste Seitenplatte (108) mit der Bodenplatte (105), der Frontplatte (106) und der Rückplatte (107) verbunden ist;
die zweite Seitenplatte (109) der ersten Seitenplatte (108) gegenüberliegt und mit der Bodenplatte (105), der Frontplatte (106) und der Rückplatte (107) verbunden ist;
der Platzierungsabschnitt (13) mit der Frontplatte (106), der ersten Seitenplatte (108) und der zweiten Seitenplatte (109) verbunden ist;
die obere Platte (110) zwischen dem Platzierungsabschnitt (13) und der Rückplatte (107) verbunden ist, wobei die obere Platte (110) mit der ersten Seitenplatte (108) und der zweiten Seitenplatte (109) verbunden ist;
die Bodenplatte (105) konfiguriert ist, um auf einer externen Stützfläche platziert zu werden;
der erste Befestigungsabschnitt (101, 134, 141) an der oberen Platte (110) angeordnet ist, und die erste Verbindungsschnittstelle (103) an der oberen Platte (110) angeordnet ist.

7. Die Expansionsbasis nach Anspruch 6, **dadurch gekennzeichnet, dass** die Frontplatte (106) in einem spitzen Winkel mit der Bodenplatte (105) verbunden ist;
die Rückplatte (107) in einem spitzen Winkel mit der Bodenplatte (105) verbunden ist;
der Platzierungsabschnitt (13) eine hintere Stützplatte (111), die mit der oberen Platte (110) verbunden ist, eine untere Tragplatte (112), die mit der hinteren Stützplatte (111) verbunden ist, eine vordere Stützplatte (113), die mit der unteren Tragplatte (112) verbunden ist, und eine Begrenzungsplatte (14) umfasst;
die hintere Stützplatte (111) in einem stumpfen Winkel mit der unteren Tragplatte (112) verbunden ist;
die Begrenzungsplatte (14) zwischen der vorderen Stützplatte (113) und der Frontplatte (106) verbunden ist;
die vordere Stützplatte (113) in einem stumpfen Winkel mit der unteren Tragplatte (112) verbunden ist;
die vordere Stützplatte (113) in einem stumpfen Winkel mit der Begrenzungsplatte (14) verbunden ist, und die Bodenplatte (105) und die untere Tragplatte (112) parallel zueinander konfiguriert sind.

8. Die Expansionsbasis nach Anspruch 6, **dadurch gekennzeichnet, dass** die Expansionsbasis (1, 11) ferner eine eingebaute Batterie (114) umfasst, wobei die eingebaute Batterie (114) innerhalb des ersten Gehäuses (10) angeordnet ist und elektrisch mit der ersten Leiterplatte (102) verbunden ist.

9. Die Expansionsbasis nach Anspruch 1, **dadurch gekennzeichnet, dass** die Expansionsbasis (1A, 1I) ferner eine dritte Verbindungsschnittstelle (104) umfasst, wobei die dritte Verbindungsschnittstelle (104) elektrisch mit der ersten Leiterplatte (102) verbunden ist;
die dritte Verbindungsschnittstelle (104) konfiguriert ist, um mit einer vierten Verbindungsschnittstelle (601) der zweiten Expansionsvorrichtung (6, 6E) gekoppelt zu werden, wodurch die erste Expansionsbasis (1A, 1G) die zweite Expansionsvorrichtung (6) mit Strom versorgt oder Daten mit der zweiten Expansionsvorrichtung (6, 6E) über die dritte Verbindungsschnittstelle (104) überträgt;
die zweite Expansionsvorrichtung (6, 6E) ein zweites Gehäuse (301, 602), eine zweite Leiterplatte (302, 603) und die zweite Verbindungsschnittstelle (401, 422, 432, 442, 453) umfasst, wobei die zweite Leiterplatte (302, 603) im Inneren des zweiten Gehäuses (301, 602) angeordnet ist;
die vierte Verbindungsschnittstelle (601) elektrisch mit der zweiten Leiterplatte (302, 603) verbunden ist;
das zweite Gehäuse (301, 602) eine Hauptstützplatte (303, 605), eine der Hauptstützplatte (303, 605) gegenüberliegende hintere Stützplatte (304, 606) und eine Seitenwand (313) umfasst, die zwischen einer Kante der Hauptstützplatte (303, 605) und einer Kante der hinteren Stützplatte (304, 606) verbunden ist.

10. Die Expansionsbasis nach Anspruch 9, **dadurch gekennzeichnet, dass** die zweite Expansionsvorrichtung (6, 6E) eine Wärmeableitungsvorrichtung (63, 44, 61) umfasst, wobei die Wärmeableitungsvorrichtung (63, 44, 61) ferner ein Wärmeableitungselement (34, 608) und einen Steuerknopf (306, 609) umfasst, die an dem zweiten Gehäuse (301, 602) angeordnet sind;
der Steuerknopf (306, 609) elektrisch mit der zweiten Leiterplatte (302, 603) verbunden ist und in einer Knopföffnung des zweiten Gehäuses (301, 602) zur Bedienung durch den Benutzer montiert ist;
das Wärmeableitungselement (34, 608) mindestens einen Wärmeableitungslüfter (31, 444, 610) umfasst, wobei der mindestens eine Wärmeableitungslüfter (31, 444, 610) in dem zweiten Gehäuse (301, 602) angeordnet ist;
die Hauptstützplatte (303, 605) mit einer Vielzahl von Luftauslässen (307, 611) versehen ist, die dem mindestens einen Wärmeableitungslüfter (31, 444, 610) entsprechen;
die hintere Stützplatte (304, 606) mit einer Vielzahl von Lufteinlässen (308, 612) versehen ist, die dem Wärmeableitungslüfter (31, 444, 610) entsprechen;
und der mindestens eine Wärmeableitungslüfter (31, 444, 610) konfiguriert ist, um die Wärme von den Lufteinlässen (308) zu den Luftauslässen (307, 611) zu leiten, wodurch vom mobilen Gerät (5) erzeugte Wärme abgeführt und weggeleitet wird.

11. Die Expansionsbasis nach Anspruch 9, **dadurch gekennzeichnet, dass** die hintere Stützplatte (304, 606) mit einer Montagestruktur (309) versehen ist;
die Montagestruktur (309) konfiguriert ist, um mit der ersten Expansionsvorrichtung (4) verbunden und fixiert zu werden;
die hintere Stützplatte (304, 606) einen Hauptkörperabschnitt (310), einen Nutabschnitt (311) und zwei Führungsabschnitte (312) umfasst, wobei zumindest ein Teil der ersten Expansionsvorrichtung (4) in einer Montagenut (32) des Nutabschnitts (311) aufgenommen und fixiert ist;
die Führungsabschnitte (312) zwischen dem Hauptkörperabschnitt (310) und zwei Seitenwänden (313) des Nutabschnitts (311) verbunden sind;
ein Abstand zwischen den beiden Führungsabschnitten (312) größer ist als ein Abstand zwischen den beiden Seitenwänden (313) des Nutabschnitts (311), wodurch sich zumindest ein Teil der ersten Expansionsvorrichtung (4, 4A, 4B, 4C, 4D, 4I) in den Nutabschnitt (311) hinein erstreckt.

12. Die Expansionsbasis nach Anspruch 9, **dadurch gekennzeichnet, dass**, wenn die zweite Expansionsvorrichtung (6, 6E) auf dem ersten Befestigungsabschnitt (101, 134, 141) platziert und mit der Expansionsbasis (1, 11) gekoppelt ist, eine Außenfläche der Hauptstützplatte (303) koplanar mit der Stützfläche des Platzierungsabschnitts (13, 138) zum Stützen des mobilen Geräts (5) ist.

13. Die Expansionsbasis nach Anspruch 9, **dadurch gekennzeichnet, dass** die zweite Expansionsvorrichtung (6, 6E) ferner eine Vielzahl von lichtemittierenden Elementen umfasst;
die Vielzahl von lichtemittierenden Elementen im Inneren des zweiten Gehäuses (301, 602) angeordnet ist und elektrisch mit der zweiten Leiterplatte (302, 603) verbunden ist, und von der Vielzahl von lichtemittierenden Elementen emittiertes Licht durch das zweite Gehäuse (301, 602) tritt und zur Außenseite der zweiten Expansionsvorrichtung (6, 6E) emittiert wird, um einen Beleuchtungseffekt zu bilden.

14. Die Expansionsbasis nach Anspruch 9, **dadurch gekennzeichnet, dass** die Expansionsbasis eine erste Expansionsbasis (1A, 1G) ist, und ferner eine zweite Expansionsbasis (1B) vorgesehen ist; eine Struktur der zweiten Expansionsbasis (1B) und eine Struktur der ersten Expansionsbasis (1A, 1G) gleich sind; die erste Expansionsbasis (1A, 1G) und die zweite Expansionsbasis (1B) nebeneinander angeordnet sind, um gemeinsam dasselbe mobile Gerät (5) zu stützen;
die erste Expansionsbasis (1A, 1G) und die zweite Expansionsbasis (1B) über eine Schnallenverbindungsstruktur oder eine magnetische Saugverbindungsstruktur einstückig verbunden sind; und wenn die erste Expansionsbasis (1A, 1G) und die zweite Expansionsbasis (1B) einstückig verbunden sind, der Platzierungsabschnitt (13, 138) der ersten Expansionsbasis (1A, 1G) und der Platzierungsabschnitt (13, 138) der zweiten Expansionsbasis (1B) ausgerichtet und verbunden sind.

## Revendications

1. Une base d'expansion, **caractérisée en ce qu'**elle comprend:
un premier boîtier (10, 10B, 133), dans laquelle le premier boîtier (10, 10B, 133) comprend une première partie de fixation (101, 134, 141) et une partie de placement (13, 138), la partie de placement (13, 138) est configurée pour placer un appareil mobile (5) de manière oblique ou verticale;
une première carte de circuit imprimé (102) située dans le premier boîtier (10); une première interface de connexion (103), et
au moins un dispositif d'expansion (2), dans laquelle la première partie de fixation (101, 134, 141) est configurée pour assembler de manière détachable l'au moins un dispositif d'expansion (2);
dans laquelle la première interface de connexion (103) est connectée électriquement à la première carte de circuit imprimé (102); la première interface de connexion (103) est agencée sur la première partie de fixation (101, 134, 141); lorsque l'au moins un dispositif d'expansion (2) est assemblé sur la première partie de fixation (101, 134, 141), la première interface de connexion (103) est configurée pour être couplée à une deuxième interface de connexion (401, 422, 432, 442, 453) de l'au moins un dispositif d'expansion (2), moyennant quoi la base d'expansion (1, 1I) est configurée pour prélever de l'énergie de l'au moins un dispositif d'expansion (2), pour fournir de l'énergie à l'au moins un dispositif d'expansion (2), et/ou pour communiquer avec l'au moins un dispositif d'expansion (2) pour transmettre des données; et
dans laquelle l'au moins un dispositif d'expansion (2) comprend un premier dispositif d'expansion (4, 4A, 4B, 4C, 4D, 4I) et un deuxième dispositif d'expansion (6, 6E), la deuxième interface de connexion (401, 422, 432, 442, 453) est agencée sur le premier dispositif d'expansion (4, 4A, 4B, 4C, 4D, 41), le premier dispositif d'expansion (4, 4A, 4B, 4C, 4D, 4I) est l'un parmi une station d'accueil (41) pourvue d'une pluralité de ports de connexion; un dispositif de stockage (42) et une batterie externe (43), le deuxième dispositif d'expansion (6, 6E) est l'un parmi un dispositif de dissipation thermique (63, 44, 61) ou un module de dissipation thermique, ou d'éclairage; et le deuxième dispositif d'expansion (6, 6E) est configuré pour être agencé entre l'appareil mobile (5) et le premier dispositif d'expansion (4, 4A, 4B, 4C, 4D, 41).

2. La base d'expansion selon la revendication 1, **caractérisée en ce que** la base d'expansion (1, 1I) comprend en outre une troisième interface de connexion (104), la troisième interface de connexion (104) est connectée électriquement à la première carte de circuit imprimé (102), la troisième interface de connexion (104) est configurée pour être couplée à une quatrième interface de connexion (601) du deuxième dispositif d'expansion (6, 6E), moyennant quoi la base d'expansion (1, 1I) fournit de l'énergie au deuxième dispositif d'expansion (6, 6E) ou transmet des données avec le deuxième dispositif d'expansion (6, 6E) par l'intermédiaire de la troisième interface de connexion (104).

3. La base d'expansion selon la revendication 1, **caractérisée en ce que** l'au moins un dispositif d'expansion (2) comprend en outre un troisième dispositif d'expansion (7, 7G);
le premier boîtier (10, 10B, 133) comprend en outre une deuxième partie de fixation (119, 135); la deuxième partie de fixation (119, 135) est assemblée de manière détachable sur le troisième dispositif d'expansion (7, 7G), lorsque le troisième dispositif d'expansion (7, 7G) est assemblé sur la deuxième partie de fixation (119, 135), ainsi le troisième dispositif d'expansion (7, 7G) est couplé à la base d'expansion (1, 1I), moyennant quoi la base d'expansion (1, 1I) prélève de l'énergie du troisième dispositif d'expansion (7, 7G), pour fournir de l'énergie au troisième dispositif d'expansion (7, 7G), et/ou pour communiquer avec le troisième dispositif d'expansion (7, 7G) pour transmettre des données.

4. La base d'expansion selon la revendication 1, **caractérisée en ce que** la première partie de fixation (101, 134, 141) comprend une fente d'enfichage, une paroi inférieure de la fente d'enfichage comprend une ouverture pour exposer un composant de port (123) de la première interface de connexion (103), et la fente d'enfichage est configurée pour stocker et fixer une extrémité du premier dispositif d'expansion (4, 4A, 4B, 4C, 4D, 4I).

5. La base d'expansion selon la revendication 1, **caractérisée en ce que** la base d'expansion (1, 1I) comprend en outre un premier élément magnétique (140), le premier élément magnétique (140) est agencé sur la première partie de fixation (101, 134, 141), le premier élément magnétique (140) est configuré pour coopérer magnétiquement avec un deuxième élément magnétique (459) sur le premier dispositif d'expansion (4, 4A, 4B, 4C, 4D, 4I), moyennant quoi le premier dispositif d'expansion (4, 4A, 4B, 4C, 4D, 4I) est fixé sur la première partie de fixation (101, 134, 141).

6. La base d'expansion selon la revendication 1, **caractérisée en ce que** le premier boîtier (10) comprend une plaque inférieure (105), une plaque avant (106), une plaque arrière (107), une première plaque latérale (108), une deuxième plaque latérale (109), et une plaque supérieure (110),
la plaque avant (106) est connectée à la plaque inférieure (105);
la plaque arrière (107) est connectée à la plaque inférieure (105) et est opposée à la plaque avant (106);
la première plaque latérale (108) est connectée à la plaque inférieure (105), à la plaque avant (106) et à la plaque arrière (107);
la deuxième plaque latérale (109) est opposée à la première plaque latérale (108) et est connectée à la plaque inférieure (105), à la plaque avant (106) et à la plaque arrière (107);
la partie de placement (13) est connectée à la plaque avant (106), à la première plaque latérale (108) et à la deuxième plaque latérale (109);
la plaque supérieure (110) est connectée entre la partie de placement (13) et la plaque arrière (107), la plaque supérieure (110) est connectée à la première plaque latérale (108) et à la deuxième plaque latérale (109);
la plaque inférieure (105) est configurée pour être placée sur une surface de support externe;
la première partie de fixation (101, 134, 141) est agencée sur la plaque supérieure (110), et la première interface de connexion (103) est agencée sur la plaque supérieure (110).

7. La base d'expansion selon la revendication 6, **caractérisée en ce que** la plaque avant (106) est connectée à la plaque inférieure (105) à un angle aigu;
la plaque arrière (107) est connectée à la plaque inférieure (105) à un angle aigu; la partie de placement (13) comprend une plaque de support arrière (111) connectée à la plaque supérieure (110), une plaque d'appui inférieure (112) connectée à la plaque de support arrière (111), une plaque de support avant (113) connectée à la plaque d'appui inférieure (112), et une plaque de limitation (14);
la plaque de support arrière (111) est connectée à la plaque d'appui inférieure (112) à un angle obtus;
la plaque de limitation (14) est connectée entre la plaque de support avant (113) et la plaque avant (106);
la plaque de support avant (113) est connectée à la plaque d'appui inférieure (112) à un angle obtus;
la plaque de support avant (113) est connectée à la plaque de limitation (14) à un angle obtus, et la plaque inférieure (105) et la plaque d'appui inférieure (112) sont configurées parallèlement l'une à l'autre.

8. La base d'expansion selon la revendication 6, **caractérisée en ce que** la base d'expansion (1, 1I) comprend en outre une batterie intégrée (114), la batterie intégrée (114) est agencée à l'intérieur du premier boîtier (10) et est connectée électriquement à la première carte de circuit imprimé (102).

9. La base d'expansion selon la revendication 1, **caractérisée en ce que** la base d'expansion (1A, 1I) comprend en outre une troisième interface de connexion (104), la troisième interface de connexion (104) est connectée électriquement à la première carte de circuit imprimé (102);
la troisième interface de connexion (104) est configurée pour être couplée à une quatrième interface de connexion (601) du deuxième dispositif d'expansion (6, 6E), moyennant quoi la première base d'expansion (1A, 1G) fournit de l'énergie au deuxième dispositif d'expansion (6) ou transmet des données avec le deuxième dispositif d'expansion (6, 6E) par l'intermédiaire de la troisième interface de connexion (104);
le deuxième dispositif d'expansion (6, 6E) comprend un deuxième boîtier (301, 602), une deuxième carte de circuit imprimé (302, 603) et la deuxième interface de connexion (401, 422, 432, 442, 453), la deuxième carte de circuit imprimé (302, 603) est agencée à l'intérieur du deuxième boîtier (301, 602);
la quatrième interface de connexion (601) est connectée électriquement à la deuxième carte de circuit imprimé (302, 603);
le deuxième boîtier (301, 602) comprend une plaque de support principale (303, 605), une plaque de support arrière (304, 606) opposée à la plaque de support principale (303, 605), et une paroi latérale (313) connectée entre un bord de la plaque de support principale (303, 605) et un bord de la plaque de support arrière (304, 606).

10. La base d'expansion selon la revendication 9, **caractérisée en ce que** le deuxième dispositif d'expansion (6, 6E) comprend un dispositif de dissipation thermique (63, 44, 61), le dispositif de dissipation thermique (63, 44, 61) comprend en outre un élément de dissipation thermique (34, 608) et un bouton de commande (306, 609) qui sont agencés sur le deuxième boîtier (301, 602);
le bouton de commande (306, 609) est connecté électriquement à la deuxième carte de circuit imprimé (302, 603) et monté dans une ouverture de bouton du deuxième boîtier (301, 602) pour l'opération par l'utilisateur;
l'élément de dissipation thermique (34, 608) comprend au moins un ventilateur de dissipation thermique (31, 444, 610), l'au moins un ventilateur de dissipation thermique (31, 444, 610) est agencé dans le deuxième boîtier (301, 602);
la plaque de support principale (303, 605) est pourvue d'une pluralité de sorties d'air (307, 611) correspondant à l'au moins un ventilateur de dissipation thermique (31, 444, 610);
la plaque de support arrière (304, 606) est pourvue d'une pluralité d'entrées d'air (308, 612) correspondant au ventilateur de dissipation thermique (31, 444, 610);
et l'au moins un ventilateur de dissipation thermique (31, 444, 610) est configuré pour conduire la chaleur des entrées d'air (308) vers les sorties d'air (307, 611), évacuant et emportant ainsi la chaleur générée par l'appareil mobile (5).

11. La base d'expansion selon la revendication 9, **caractérisée en ce que** la plaque de support arrière (304, 606) est pourvue d'une structure de montage (309);
la structure de montage (309) est configurée pour être connectée et fixée avec le premier dispositif d'expansion (4);
la plaque de support arrière (304, 606) comprend une partie de corps principal (310), une partie de rainure (311), et deux parties de guidage (312), au moins une partie du premier dispositif d'expansion (4) est stockée et fixée dans une rainure de montage (32) de la partie de rainure (311);
les parties de guidage (312) sont connectées entre la partie de corps principal (310) et deux parois latérales (313) de la partie de rainure (311);
une distance entre les deux parties de guidage (312) est supérieure à une distance entre les deux parois latérales (313) de la partie de rainure (311), moyennant quoi au moins une partie du premier dispositif d'expansion (4, 4A, 4B, 4C, 4D, 41) s'étend dans la partie de rainure (311).

12. La base d'expansion selon la revendication 9, **caractérisée en ce que** lorsque le deuxième dispositif d'expansion (6, 6E) est placé sur la première partie de fixation (101, 134, 141) et est couplé à la base d'expansion (1, 1I), une surface externe de la plaque de support principale (303) est coplanaire avec la surface de support de la partie de placement (13, 138) pour supporter l'appareil mobile (5).

13. La base d'expansion selon la revendication 9, **caractérisée en ce que** le deuxième dispositif d'expansion (6, 6E) comprend en outre une pluralité d'éléments électroluminescents;
la pluralité d'éléments électroluminescents sont agencés à l'intérieur du deuxième boîtier (301, 602) et sont connectés électriquement à la deuxième carte de circuit imprimé (302, 603), et la lumière émise par la pluralité d'éléments électroluminescents traverse le deuxième boîtier (301, 602) et est émise vers l'extérieur du deuxième dispositif d'expansion (6, 6E) pour former un effet d'éclairage.

14. La base d'expansion selon la revendication 9, **caractérisée en ce que** la base d'expansion est une première base d'expansion (1A, 1G), et une deuxième base d'expansion (1B) est en outre prévue; une structure de la deuxième base d'expansion (1B) et une structure de la première base d'expansion (1A, 1G) sont identiques; la première base d'expansion (1A, 1G) et la deuxième base d'expansion (1B) sont agencées côte à côte pour supporter conjointement le même appareil mobile (5);
la première base d'expansion (1A, 1G) et la deuxième base d'expansion (1B) sont connectées d'un seul tenant par l'intermédiaire d'une structure de connexion à boucle ou d'une structure de connexion à aspiration magnétique; et lorsque la première base d'expansion (1A, 1G) et la deuxième base d'expansion (1B) sont connectées d'un seul tenant, la partie de placement (13, 138) de la première base d'expansion (1A, 1G) et la partie de placement (13, 138) de la deuxième base d'expansion (1B) sont alignées et connectées.
